# EUROPEAN PATENT APPLICATION

(11) **EP 4 804 441 A1**
(43) Date of publication of application: **09.09.2026**
(21) Application number: 23957282.9
(22) Date of filing: 02.11.2023
(51) Int. Cl.: H04L 5/00

(54) **QUASI CO-LOCATION ASSUMPTION DETERMINATION METHOD, TERMINAL, NETWORK DEVICE, AND SYSTEM**

(71) Applicant: Beijing Xiaomi Mobile Software Co., Ltd., Beijing 100085 (CN)
(72) Inventor: LI, Mingju, Beijing 100085 (CN)
(74) Representative: Dehns Germany Partnerschaft mbB
(86) International application number: PCT/CN2023/129440
(87) International publication number: WO 2025/091413

(57) **Abstract**

The present disclosure relates to a quasi co-location (QCL) assumption determination method, a terminal, a network device, and a system. The method comprises: a terminal determines a first QCL assumption, wherein the first QCL assumption is a QCL assumption of an aperiodic channel state information reference signal (AP-CSI-RS), a time domain interval between the AP CSI-RS and a first physical downlink control channel (PDCCH) that schedules the AP CSI-RS is less than or equal to a first time threshold, the AP CSI-RS and another downlink signal are located in the same symbol, and a control resource set (CORESET) corresponding to the first PDCCH corresponds to a first CORESET pool index. By means of embodiments of the present disclosure, a configuration and determination method for a TCI state corresponding to an aperiodic reference signal resource can be determined, and the transmission performance of a multi-transmission reception point is improved.

## Description

### TECHNICAL FIELD

The present disclosure relates to the field of communication technology, and in particular to a quasi co-location assumption determination method, a terminal, a network device and a system.

### BACKGROUND

In New Radio (NR), particularly in frequency range 2, beam-based transmission and reception are required to ensure coverage.

Based on the discussion in Rel-17, to reduce signaling overhead, it is desirable to use a unified Transmission Configuration Indicator State (unified TCI State).

### SUMMARY

In cases where a PDSCH has multiple TCI indications, or where multiple PDSCHs using different TCI states overlap, the terminal must determine which TCI state to use for reception.

The embodiments of the present disclosure provide a quasi co-location assumption determination method, a terminal, a network device and a system.

According to a first aspect of the embodiments of the present disclosure, there is provided a quasi co-location assumption determination method, including determining, by a terminal, a first quasi co-location QCL assumption, where the first QCL assumption is a QCL assumption of an aperiodic channel state information reference signal AP CSI-RS; where a time-domain interval between the AP CSI-RS and a first physical downlink control channel PDCCH that schedules the AP CSI-RS is less than or equal to a first time threshold; the AP CSI-RS is in the same symbol as other downlink signal; a control resource set CORESET corresponding to the first PDCCH corresponds to a first control resource set pool index.

According to a second aspect of the embodiments of the present disclosure, there is provided a quasi co-location assumption determination method, including transmitting first indication information, where the first indication information is configured to indicate at least one set of indicated transmission configuration indication states (indicated TCI states), where the at least one set of indicated transmission configuration indication states is used by a terminal to determine a first quasi co-location QCL assumption, and the first QCL assumption is a QCL assumption of an aperiodic channel state information reference signal AP CSI-RS; where a time-domain interval between the AP CSI-RS and a first physical downlink control channel PDCCH that schedules the AP CSI-RS is less than or equal to a first time threshold; the AP CSI-RS is in the same symbol as other downlink signal; a control resource set CORESET corresponding to the first PDCCH corresponds to a first control resource set pool index.

According to a third aspect of the embodiments of the present disclosure, there is provided a quasi co-location assumption method, including a network device transmits first indication information, where the first indication information is configured to indicate at least one set of indicated transmission configuration indication states; a terminal determines a first quasi co-location QCL assumption based on the at least one set of indicated transmission configuration indication states, where the first QCL assumption is a QCL assumption of an aperiodic channel state information reference signal AP CSI-RS; where a time-domain interval between the AP CSI-RS and a first physical downlink control channel PDCCH that schedules the AP CSI-RS is less than or equal to a first time threshold; the AP CSI-RS is in the same symbol as other downlink signal; a control resource set CORESET corresponding to the first PDCCH corresponds to a first control resource set pool index.

According to a fourth aspect of the embodiments of the present disclosure, there is provided a terminal, including a processing module, configured to determine a first quasi co-location QCL assumption, where the first QCL assumption is a QCL assumption of an aperiodic channel state information reference signal AP CSI-RS; where a time-domain interval between the AP CSI-RS and a first physical downlink control channel PDCCH that schedules the AP CSI-RS is less than or equal to a first time threshold; the AP CSI-RS is in the same symbol as other downlink signal; a control resource set CORESET corresponding to the first PDCCH corresponds to a first control resource set pool index.

According to a fifth aspect of the embodiments of the present disclosure, there is provided a network device, including a transceiver module, configured to transmit first indication information, where the first indication information is configured to indicate at least one set of indicated transmission configuration indication states (indicated TCI states), where the at least one set of indicated transmission configuration indication states is used by a terminal to determine a first quasi co-location QCL assumption, and the first QCL assumption is a QCL assumption of an aperiodic channel state information reference signal AP CSI-RS; where a time-domain interval between the AP CSI-RS and a first physical downlink control channel PDCCH that schedules the AP CSI-RS is less than or equal to a first time threshold; the AP CSI-RS is in the same symbol as other downlink signals; a control resource set CORESET corresponding to the first PDCCH corresponds to a first control resource set pool index.

According to a sixth aspect of the embodiments of the present disclosure, there is provided a terminal, including one or more processors; where the processors are configured to perform the quasi co-location assumption determination method according to the first aspect.

According to a seventh aspect of the embodiments of the present disclosure, there is provided a network device, including one or more processors; where the processors are configured to perform the quasi co-location assumption determination method according to the second aspect.

According to an eighth aspect of the embodiments of the present disclosure, there is provided a communication system, including a terminal and a network device, where the terminal is configured to implement the quasi co-location assumption determination method according to the first aspect, and the network device is configured to implement the quasi co-location assumption determination method according to the second aspect.

According to a ninth aspect of the embodiments of the present disclosure, there is provided a storage medium storing instructions, when the instructions are executed on a communication device, the communication device is caused to perform the quasi co-location assumption determination method according to any one of the first aspect or the second aspect.

The embodiments of the present disclosure provide a method for determining the configuration of the TCI state corresponding to the aperiodic reference signal resource, thereby improving the transmission performance of multiple transmission and receiving nodes.

### BRIEF DESCRIPTION OF THE DRAWINGS

To more clearly illustrate the technical solutions in the embodiments of the present disclosure, the accompanying drawings required for describing the embodiments are introduced below. These drawings are merely some embodiments of the present disclosure and do not impose specific limitations on the scope of protection of the present disclosure.
FIG. 1 is a schematic diagram of an architecture of a communication system according to an embodiment of the present disclosure.
FIG. 2 is an interactive schematic diagram of a quasi co-location assumption determination method according to an embodiment of the present disclosure.
FIG. 3A is a flowchart illustrating a quasi co-location assumption determination method according to an embodiment of the present disclosure.
FIG. 3B is a flowchart illustrating a quasi co-location assumption determination method according to an embodiment of the present disclosure.
FIG. 3C is a flowchart illustrating a quasi co-location assumption determination method according to an embodiment of the present disclosure.
FIG. 4 is a flowchart illustrating a quasi co-location assumption determination method according to an embodiment of the present disclosure.
FIG. 5 is an interactive schematic diagram of a quasi co-location assumption determination method according to an embodiment of the present disclosure.
FIG. 6A is a structural schematic diagram of a terminal proposed in an embodiment of the present disclosure.
FIG. 6B is a structural schematic diagram of a network device proposed in an embodiment of the present disclosure.
FIG. 7A is a structural schematic diagram of a communication device proposed in an embodiment of the present disclosure.
FIG. 7B is a structural schematic diagram of a chip proposed in an embodiment of the present disclosure.

### DETAILED DESCRIPTION

Embodiments of the present disclosure propose a method, a terminal, a network device, and a system for quasi co-location assumption determination.

In a first aspect, embodiments of the present disclosure propose a quasi co-location assumption determination method, including determining, by a terminal, a first quasi co-location QCL assumption, where the first QCL assumption is a QCL assumption of an aperiodic channel state information reference signal (AP CSI-RS); where a time-domain interval between the AP CSI-RS and a first physical downlink control channel (PDCCH) that schedules the AP CSI-RS is less than or equal to a first time threshold; the AP CSI-RS is in the same symbol as other downlink signals; and the control resource set (CORESET) corresponding to the first PDCCH corresponds to a first control resource set pool index.

In the above embodiments, by determining the first QCL assumption, the terminal clarifies that in cases where the PDSCH has multiple TCI indications, or where two PDSCHs using different TCI states overlap, the terminal can determine the TCI state used corresponding to the AP CSI-RS, thereby improving the transmission performance of multiple transmission/reception points.

In some embodiments of the first aspect, the first QCL assumption is the same as a second QCL assumption, the second QCL assumption is a QCL assumption of other downlink signals.

In the above embodiments, the first QCL assumption is explicitly defined to be the same as the QCL assumptions of other downlink signals. This eliminates the need for independent design for the first QCL assumption, reducing resource overhead, and allows determination of the TCI state correspondingly used by the AP CSI-RS, thereby improving the transmission performance of multiple transmission/reception points.

In some embodiments of the first aspect, the first QCL assumption corresponds to the first indicated transmission configuration indication (TCI) state among two indicated transmission configuration indication states.

In the above embodiments, the correspondence between the first QCL assumption and the indicated TCI state is defined, thereby determining the TCI state correspondingly used by the AP CSI-RS and improving the transmission performance of multiple transmission/reception points.

In some embodiments of the first aspect, the transmission configuration indication TCI state corresponding to the first QCL assumption is determined based on Radio Resource Control (RRC) configuration; where the transmission configuration indication state corresponding to the first QCL assumption includes any one of the following: corresponding to the first indicated transmission configuration indication state among two indicated transmission configuration indication states; or corresponding to the second indicated transmission configuration indication state among two indicated transmission configuration indication states.

In the above embodiments, a correspondence between the first QCL assumption and the indicated TCI state is defined, thereby determining the TCI state correspondingly used by the AP CSI-RS and improving the transmission performance of multiple transmission/reception points.

In some embodiments of the first aspect, the indicated transmission configuration indication state includes an indicated joint TCI state, or an indicated downlink TCI state.

In the above embodiments, multiple forms of the indicated TCI state corresponding to the first QCL assumption are clarified to correspond to various communication scenarios.

In some embodiments of the first aspect, the AP CSI-RS is configured to: follow the unified TCI state; or not follow the unified TCI state.

In some embodiments of the first aspect, the other downlink signals include at least one of the following: a Physical Downlink Shared Channel (PDSCH) scheduled by a second PDCCH; an AP CSI-RS scheduled by a third PDCCH; a periodic CSI-RS; or a semi-persistent CSI-RS; where the time-domain interval between the PDSCH and the second PDCCH is greater than or equal to a second time threshold; the time-domain interval between the AP CSI-RS scheduled by the third PDCCH and the third PDCCH is greater than a first time threshold; and the control resource set pool index of the control resource set corresponding to the second PDCCH or third PDCCH is a first control resource set pool index.

In the above embodiments, this can limit the AP CSI-RS to overlap only with other downlink signals corresponding to the same control resource set pool index, preventing from triggering cross-control resource set pool index and avoiding communication system anomalies caused by cross-control resource set pool overlap.

In some embodiments of the first aspect, the TCI state of the AP CSI-RS is not configured to follow a unified TCI state.

In the above embodiments, the configuration content of TCI state of the AP CSI-RS is clearly defined, thereby enabling the terminal to determine the corresponding TCI state when determining the first QCL assumption.

In some embodiments of the first aspect, the RRC configuration includes any one of the following: the RRC configures the AP CSI-RS to follow the first indicated transmission configuration indication state; the RRC configures the AP CSI-RS to follow the second indicated transmission configuration indication state.

In the above embodiments, the configuration content of the TCI state of the AP CSI-RS is clearly defined, thereby enabling the terminal to determine the corresponding TCI state when determining the first QCL assumption.

In some embodiments of the first aspect, the other downlink signals include a first PDSCH and a second PDSCH; the first PDSCH and the second PDSCH satisfy at least one of the following: the time-domain interval between the first PDSCH and the fourth PDCCH is greater than or equal to a second time threshold, where the fourth PDCCH is a PDCCH that schedules the first PDSCH; the time-domain interval between the second PDSCH and the fifth PDCCH is greater than or equal to the second time threshold, where the fifth PDCCH is a PDCCH that schedules the second PDSCH; the control resource set pool index of the control resource set corresponding to the fourth PDCCH is different from the control resource set pool index of the control resource set corresponding to the fifth PDCCH; the first PDSCH corresponds to the first indicated joint transmission configuration indication state or the first indicated downlink transmission configuration indication state; the second PDSCH corresponds to the second indicated joint transmission configuration indication state or the second indicated downlink transmission configuration indication state.

In some embodiments of the first aspect, two indicated transmission configuration indication states are determined based on first indication information, where the first indication information satisfies at least one of the following: the first indication information includes a first media access control control unit (MAC CE), the first MAC CE being configured to activate at least one set of indicated transmission configuration indication states; the at least one set of indicated transmission configuration indication states corresponds to a code point in the transmission configuration indication state indication field of the downlink control information (DCI); or the first indication information includes a second MAC CE and a first DCI, where the second MAC CE is configured to indicate at least one set of indicated transmission configuration indication states corresponding to each code point among multiple code points in the DCI transmission configuration indication state indication field, and the transmission configuration indication state indication field of the first DCI is configured to indicate one code point among multiple code points, where one set of indicated transmission configuration indication states includes an indicated joint transmission configuration indication state, or one set of indicated transmission configuration indication states includes an indicated downlink transmission configuration indication state and/or an indicated uplink transmission configuration indication state.

In the above embodiments, a method for determining the indicated TCI state is clearly defined. The terminal can determine the two indicated TCI states to be used from among multiple sets of indicated TCI states indicated by the first indication information, thereby determining the first QCL assumption.

In some embodiments of the first aspect, the AP CSI-RS is a CSI-RS for CSI measurement or a CSI-RS for beam management.

In a second aspect, embodiments of the present disclosure provide a quasi co-location assumption determination method. The method includes sending first indication information, the first indication information is configured to indicate at least one set of indicated transmission configuration indication TCI states, where the at least one set of transmission configuration indication states is used by the terminal to determine a first quasi co-location QCL assumption, the first QCL assumption is a QCL assumption of the aperiodic channel state information reference signal AP CSI-RS; where the time-domain interval between the AP CSI-RS and a first physical downlink control channel (PDCCH) that schedules the AP CSI-RS is less than or equal to a first time threshold; the AP CSI-RS is in the same symbol as other downlink signals; and the control resource set (CORESET) corresponding to the first PDCCH corresponds to a first control resource set pool index.

In some embodiments of the second aspect, the first QCL assumption is the same as a second QCL assumption, where the second QCL assumption is a QCL assumption for other downlink signals.

In some embodiments of the second aspect, the first QCL assumption corresponds to the first transmission configuration indication state among two indicated transmission configuration indication states.

In some embodiments of the second aspect, Radio Resource Control (RRC) configuration signaling is transmitted to indicate the transmission configuration indication state (TCI state) corresponding to the first QCL assumption; where the transmission configuration indication state corresponding to the first QCL assumption includes any one of the following: corresponding to the first indicated transmission configuration indication state among two indicated transmission configuration indication states; or corresponding to the second indicated transmission configuration indication state among two indicated transmission configuration indication states.

In some embodiments of the second aspect, the indicated transmission configuration indication state includes an indicated joint transmission configuration indication state (indicated joint TCI state), or an indicated downlink transmission configuration indication state (indicated DL TCI state).

In some embodiments of the second aspect, a Radio Resource Control (RRC) configuration signaling is transmitted to indicate the AP CSI-RS to follow the unified TCI state or not follow the unified TCI state.

In some embodiments of the second aspect, other downlink signals include at least one of the following: a Physical Downlink Shared Channel (PDSCH) scheduled by a second PDCCH; an AP CSI-RS scheduled by a third PDCCH; a periodic CSI-RS; a semi-persistent CSI-RS; where the time-domain interval between the PDSCH and the second PDCCH is greater than or equal to a second time threshold; the time-domain interval between the AP CSI-RS scheduled by the third PDCCH and the third PDCCH is greater than a first time threshold; and the control resource set pool index of the control resource set corresponding to the second PDCCH or third PDCCH is a first control resource set pool index.

In some embodiments of the second aspect, a Radio Resource Control (RRC) configuration signaling is transmitted to indicate that the TCI state of the AP CSI-RS does not follow the unified TCI state.

In some embodiments of the second aspect, the RRC configuration includes any one of the following: the RRC configures AP CSI-RS to follow the first indicated transmission configuration indication state; the RRC configures AP CSI-RS to follow the second indicated transmission configuration indication state.

In some embodiments of the second aspect, the other downlink signals include a first PDSCH and a second PDSCH; the first PDSCH and the second PDSCH satisfy at least one of the following: the time-domain interval between the first PDSCH and the fourth PDCCH is greater than or equal to a second time threshold, where the fourth PDCCH is a PDCCH that schedules the first PDSCH; the time-domain interval between the second PDSCH and the fifth PDCCH is greater than or equal to the second time threshold, where the fifth PDCCH is the PDCCH that schedules the second PDSCH; the control resource set pool index of the control resource set corresponding to the fourth PDCCH is different from the control resource set pool index of the control resource set corresponding to the fifth PDCCH; the first PDSCH corresponds to the first indicated joint transmission configuration indication state or the first indicated downlink transmission configuration indication state; the second PDSCH corresponds to the second indicated joint transmission configuration indication state or the second indicated downlink transmission configuration indication state.

In some embodiments of the second aspect, the first indication information includes a first media access control control element (MAC CE), the first MAC CE is configured to activate at least one set of indicated transmission configuration indication states; the at least one set of indicated transmission configuration indication states corresponds to a code point in the TCI state indication field of the downlink control information (DCI); or the first indication information includes a second MAC CE and a first DCI, where the second MAC CE is configured to indicate at least one set of indicated transmission configuration indication states corresponding to each code point in the plurality of code points in the DCI transmission configuration indication state indication field, and the TCI state indication field of the first DCI is configured to indicate one code point among the plurality of code points, where one set of indicated transmission configuration indication states includes an indicated uplink/downlink joint transmission configuration indication state, or one set of indicated transmission configuration indication states includes an indicated downlink transmission configuration indication state and/or an indicated uplink transmission configuration indication state.

In some embodiments of the second aspect, the AP CSI-RS is a CSI-RS for CSI measurement or a CSI-RS for beam management.

In a third aspect, embodiments of the present disclosure propose a quasi co-location assumption determination method. The method includes a network device sending first indication information, the first indication information indicating at least one set of indicated Transmission Configuration Indication (TCI) states; a terminal determining a first quasi co-location QCL assumption based on the at least one set of indicated Transmission Configuration Indication states, the first QCL assumption being a QCL assumption of an aperiodic Channel State Information Reference Signal (AP CSI-RS); where the time-domain interval between the AP CSI-RS and a first Physical Downlink Control Channel (PDCCH) scheduling the AP CSI-RS is less than or equal to a first time threshold; the AP CSI-RS is in the same symbol as other downlink signals; and the control resource set (CORESET) corresponding to the first PDCCH corresponds to a first control resource set pool index.

In a fourth aspect, embodiments of the present disclosure propose a terminal, including: determining a first quasi co-location QCL assumption, the first QCL assumption being a QCL assumption of an aperiodic Channel State Information Reference Signal (AP CSI-RS); where a time-domain interval between the AP CSI-RS and a first Physical Downlink Control Channel (PDCCH) scheduling the AP CSI-RS is less than or equal to a first time threshold; the AP CSI-RS is in the same symbol as other downlink signals; a control resource set CORESET corresponding to the first PDCCH corresponds to a first control resource set pool index.

In a fifth aspect, embodiments of the present disclosure propose a network device, including: a transceiver module, configured to transmit first indication information, the first indication information being configured to indicate at least one set of indicated Transmission Configuration Indication State (indicated TCI state), where the at least one set of indicated Transmission Configuration Indication state is used by a terminal to determine a first quasi co-location QCL assumption, the first QCL assumption being a QCL assumption of the aperiodic channel state information reference signal AP CSI-RS; where the time interval between the AP CSI-RS and a first physical downlink control channel (PDCCH) that schedules the AP CSI-RS is less than or equal to a first time threshold; the AP CSI-RS is in the same symbol as other downlink signals; a control resource set CORESET corresponding to the first PDCCH corresponds to a first control resource set pool index.

In a sixth aspect, embodiments of the present disclosure provide a terminal, including one or more processors; where the processors are configured to perform the quasi co-location assumption determination method of the first aspect.

In a seventh aspect, embodiments of the present disclosure provide a network device, including one or more processors; where the processors are configured to perform the quasi co-location assumption determination method of the second aspect.

In an eighth aspect, embodiments of the present disclosure provide a communication system, including a terminal and a network device, where the terminal is configured to implement the quasi co-location assumption determination method of the first aspect, and the network device is configured to implement the quasi co-location assumption determination method of the second aspect.

In a ninth aspect, embodiments of the present disclosure provide a storage medium storing instructions that, when executed on a communication device, cause the communication device to perform the quasi co-location assumption determination method of either the first or second aspect.

It is understood that the above-described terminal, network device, communication system, storage medium, program product, computer program, chip, or chip system are all configured to perform the methods proposed in the embodiments of the present disclosure. Therefore, the beneficial effects achieved can be referred to the beneficial effects in the corresponding methods.

The embodiments of the present disclosure provide a quasi co-location assumption determination method, a terminal, a network device, and a system. In some embodiments, the terms "quasi co-location assumption determination method" and "information processing method", "communication method", etc., are interchangeable; the terms "quasi co-location assumption determination device" and "information processing device", "communication device", etc., are interchangeable; and the terms "information processing system", "communication system", etc., are interchangeable.

The embodiments of the present disclosure herein are not exhaustive, but merely illustrative of some embodiments, and are not intended to limit the scope of protection of the present disclosure. Unless contradictory, each step in a particular embodiment can be implemented as an independent embodiment, and the steps can be arbitrarily combined. For example, a solution after removing some steps in a particular embodiment can also be implemented as an independent embodiment, and the order of the steps in a particular embodiment can be arbitrarily interchanged. Furthermore, the optional implementation methods in a particular embodiment can be arbitrarily combined; moreover, the embodiments can be arbitrarily combined. For example, some or all steps of different embodiments can be arbitrarily combined, and a particular embodiment can be arbitrarily combined with optional implementation methods of other embodiments.

In embodiments of the present disclosure, unless otherwise specified or logically conflicting, the terminology and/or descriptions between the embodiments are consistent and can be mutually referenced. Technical features in different embodiments can be combined to form new embodiments based on their inherent logical relationships.

The terminology used in the embodiments of the present disclosure is only for the purpose of describing specific embodiments and is not intended to limit the present disclosure.

In the embodiments of the present disclosure, unless otherwise stated, elements expressed in the singular, such as "a", "an", "the", "the above mentioned", "said", "the aforementioned", "this", etc., can mean "one and only one", or "one or more", "at least one", etc. For example, when using articles such as "a", "an", "the", etc., in translation, the noun following the article can be understood as either a singular or a plural expression.

In the embodiments of the present disclosure, "multiple" refers to two or more.

In some embodiments, terms such as "at least one of", "one or more", "a plurality of", "multiple", etc. can be used interchangeably.

In some embodiments, the notation "at least one of A and B", "A and/or B", "A in one case, B in another", "in response to one case A, in response to another case B", etc., may include the following technical solutions depending on the situation: in some embodiments, A (executed independently of B); in some embodiments, B (executed independently of A); in some embodiments, selective execution from A and B (A and B are selectively executed); in some embodiments, A and B (both A and B are executed). The same applies when there are more branches such as A, B, C, etc.

In some embodiments, the notation "A or B", etc., may include the following technical solutions depending on the situation: in some embodiments, A (executed independently of B); in some embodiments, B (executed independently of A); in some embodiments, selective execution from A and B (A and B are selectively executed). The same applies when there are more branches such as A, B, C, etc.

The prefixes such as "first," "second," etc., in the embodiments of the present disclosure are merely for distinguishing different descriptive objects and do not impose restrictions on the position, order, priority, number, or content of the descriptive objects. The description of the descriptive objects should be found in the claims or the context of the embodiments, and the use of prefixes should not constitute unnecessary restrictions. For example, if the descriptive object is a "field", then the ordinal numbers before "field" in "first field" and "second field" do not restrict the position or order of the "fields". The "first" and "second" do not restrict whether the "fields" they modify are in the same message, nor do they restrict the order of "first field" and "second field". Similarly, if the descriptive object is a "level", then the ordinal numbers before "level" in "first level" and "second level" do not restrict the priority between "levels". Furthermore, the number of descriptive objects is not limited by ordinal numbers and can be one or more. Taking "first device" as an example, where the number of "device" may be one or more. Furthermore, the objects modified by different prefixes can be the same or different. For example, if the object being described is "device", then "first device" and "second device" can be the same device or different devices, and their types can be the same or different; similarly, if the object being described is "information", then "first information" and "second information" can be the same information or different information, and their content can be the same or different.

In some embodiments, "including A", "containing A", "for indicating A" and "carrying A" can be interpreted as directly carrying A or indirectly indicating A.

In some embodiments, terms such as "time/frequency", "time/frequency domain", etc. refer to time domain and/or frequency domain.

In some embodiments, terms such as "in response to...", "in response to determining...", "in the case of...", "when...", "upon ...", "if...", etc. can be interchanged.

In some embodiments, terms such as "greater than", "greater than or equal to", "not smaller than", "more than", "more than or equal to", "not less than", "higher than", "higher than or equal to", "not lower than", "above", etc. can be used interchangeably. Terms such as "smaller than", "smaller than or equal to", "not greater than", "less than", "less than or equal to", "not more than", "lower than", "lower than or equal to", "not higher than", "below", etc. can be used interchangeably.

In some embodiments, "device" can be interpreted as physical or virtual, and its name is not limited to the names described in the embodiments. Terms such as "apparatus", "equipment", "device", "circuit", "network element", "node", "function", "unit", "section", "system", "network", "chip", "chip system", "entity", "main body", etc. can be used interchangeably.

In some embodiments, "network" can be interpreted as devices included in the network (e.g., access network device, core network device, etc.).

In some embodiments, the terms such as "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)", etc. are interchangeable.

In some embodiments, the terms such as "terminal", "terminal device", "user equipment (UE)", "user terminal", "mobile station (MS)", "mobile terminal (MT)", subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client, etc. are used interchangeably.

In some embodiments, an access network device, a core network device, or a network device can be replaced with a terminal. For example, various embodiments of the present disclosure can also be applied to structures where communication between access network device, core network device, or network device and terminals is replaced with communication between multiple terminals (e.g., device-to-device (D2D), vehicle-to-everything (V2X), etc.). In this case, the structure can also be configured such that the terminal has all or part of the functions of the access network device. Furthermore, terms such as "uplink", "downlink", etc. can be replaced with terms corresponding to communication between terminals (e.g., "sidelink"). For example, uplink channel, downlink channel, etc., can be replaced with sidelink channel, and uplink link, downlink, etc., can be replaced with sidelink.

In some embodiments, the terminal can be replaced by an access network device, a core network device, or a network device. In this case, it can also be configured such that the access network device, core network device, or network device has all or part of the functions of the terminal.

In some embodiments, the acquisition of data, information, etc., may comply with the laws and regulations of the country where the location is situated.

In some embodiments, data, information, etc., may be acquired after obtaining the user's consent.

Furthermore, each element, each row, or each column in the tables of embodiments of the present disclosure can be implemented as an independent embodiment, and a combination of any element, any row, or any column can also be implemented as an independent embodiment.

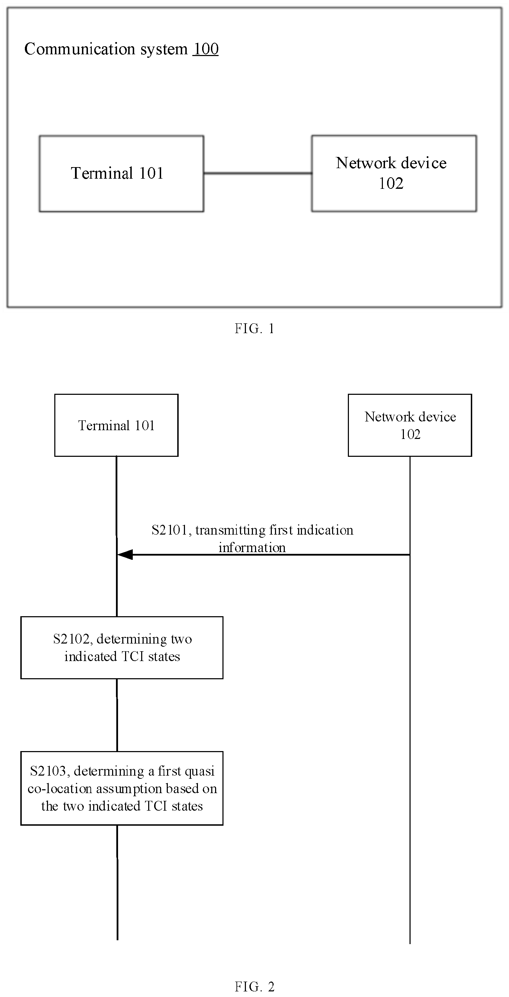

FIG. 1 is a schematic diagram of an architecture of a communication system according to an embodiment of the present disclosure. As shown in FIG. 1, the communication system 100 includes a terminal 101 and a network device 102.

In some embodiments, the terminal 101 includes, for example, at least one of a mobile phone, a wearable device, an Internet of Things device, a car with communication capability, a smart car, a tablet computer (pad), a computer with wireless transceiver capability, a virtual reality (VR) terminal device, an augmented reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, and a wireless terminal device in smart home, but is not limited thereto.

In some embodiments, the network device 102 may include at least one of an access network device and a core network device.

In some embodiments, the access network device is, for example, a node or device that connects a terminal to a wireless network. The access network device may include at least one of an evolved Node B (eNB) in a 5G communication system, a next-generation eNB (ng-eNB), or a next-generation Node B (ng-NB), Home Node B (HNB), Home Evolved NodeB (HeNB), radio backhaul device, Radio Network Controller (RNC), Base Station Controller (BSC), Base Transceiver Station (BTS), Base Band Unit (BBU), Mobile Switching Center, Base Station in 6G Communication Systems, Open RAN, Cloud RAN, Base Station in Other Communication Systems, and Access Node in Wi-Fi Systems, but not limited to these.

In some embodiments, the technical solutions of the present disclosure are applicable to Open RAN architectures. In this case, the interfaces between or within access network devices involved in the embodiments of the present disclosure can become internal interfaces of Open RAN. The processes and information interactions between these internal interfaces can be implemented through software or programs.

In some embodiments, the access network device can be composed of a central unit (CU) and distributed units (DUs). The CU can also be called a control unit. Using a CU-DU structure can separate the protocol layers of the access network device. Some protocol layer functions are centrally controlled by the CU, while the remaining part or all protocol layer functions are distributed in the DUs, which is centrally controlled by the CU. However, this is not a limitation.

In some embodiments, the core network device can be a single device, including one or more network elements, or multiple devices or a group of devices, each including all or part of the aforementioned one or more network elements. Network elements can be virtual or physical. The core network includes, for example, at least one of the Evolved Packet Core (EPC), 5G Core Network (5GCN), and Next Generation Core (NGC).

It is understood that the communication system described in the embodiments of the present disclosure is for the purpose of more clearly illustrating the technical solutions of the embodiments of the present disclosure and does not constitute a limitation on the technical solutions proposed in the embodiments of the present disclosure. Those skilled in the art will recognize that, with the evolution of system architecture and the emergence of new business scenarios, the technical solutions proposed in the embodiments of the present disclosure are also applicable to similar technical problems.

The following embodiments of the present disclosure can be applied to the communication system 100 shown in FIG. 1, or to some of its components, but are not limited thereto. The components shown in FIG. 1 are illustrative; the communication system may include all or some of the components in FIG. 1, or other components not shown in FIG1. The number and form of each component are arbitrary; each component can be physical or virtual. The connection relationship between the components is illustrative; the components may be unconnected or connected, and the connection can be in any manner, including direct or indirect connections, wired or wireless connections.

The embodiments of the present disclosure can be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), Future Radio Access (FRA), New-Radio Access Technology (RAT), New Radio (NR), New radio access (NX), Future generation radio access (FX), Global System for Mobile communications (GSM (Registered Trademark)), CDMA2000, Ultra Mobile Broadband (UMB), IEEE 802.11 (Wi-Fi (Registered Trademark)), IEEE 802.16 (WiMAX (Registered Trademark)), and IEEE 802.20, Ultra-Wideband (UWB), Bluetooth (Registered Trademark), Public Land Mobile Network (PLMN) networks, Device-to-Device (D2D) systems, Machine-to-Machine (M2M) systems, Internet of Things (IoT) systems, Vehicle-to-Everything (V2X) systems, systems utilizing other communication methods, next-generation systems built upon them, etc. Furthermore, multiple systems can be combined (e.g., a combination of LTE or LTE-A with 5G, etc.).

In New Radio (NR), particularly in frequency band 2, beam-based transmission and reception are required to ensure coverage.

In some embodiments, based on the Rel-16 discussion, beams of at least one of the following are independently indicated: Physical Downlink Control Channel (PDCCH), Physical Downlink Shared Channel (PDSCH), Physical Uplink Shared Channel (PUSCH), Physical Uplink Control Channel (PUCCH), or a reference signal, etc. The beam includes Transmission Configuration Indicator State (TCI state) or spatial relation information.

In some embodiments, the PDCCH and PUCCH use a Medium Access Control Control Element (MAC CE) to activate a beam.

In some embodiments, the PDSCH and PUSCH indicate their respective beams based on Downlink Control Information (DCI).

In some embodiments, the reference signal includes at least one of the following: Channel State Information Reference Signal (CSI-RS), Sounding Reference Signal (SRS), Positioning Reference Signal (PRS), Tracking Reference Signal (TRS), etc.

In some embodiments, the CSI-RS includes at least one of the following: a CSI-RS for channel state information measurement, a CSI-RS for beam measurement, or a CSI-RS for path loss estimation.

In some embodiments, the SRS includes at least one of the following: a codebook-based SRS for channel state information measurement, a non-codebook-based SRS for channel state information measurement, an SRS for beam measurement, or an SRS for positioning measurement.

In some embodiments, based on the discussion in Rel-17, to reduce signaling overhead, it is desirable to use the Unified Transmission Configuration Indicator State (unified TCI State).

In some embodiments, the unified TCI state typically has the following indication forms, including: - A) separate indications for uplink and downlink, for example, downlink (DL) TCI state and uplink (UL) TCI state. -B) joint indication of uplink and downlink TCI state (joint TCI state).

For example, if a network device (e.g., a base station) indicates a DL TCI state for downlink, then that TCI state can be used for at least one of the following: the terminal's PDSCH, the terminal's PDCCH (e.g., a terminal-dedicated PDCCH, UE-dedicated PDCCH), or a part of CSI-RS (e.g., aperiodic CSI-RS).

For example, if a network device (e.g., a base station) indicates a TCI state for uplink, then the TCI state for uplink can be used for at least one of the following: the terminal's PUSCH, the terminal's PUCCH, or a part of SRS.

For example, if a network device (e.g., a base station) indicates an uplink and downlink joint TCI state, the uplink and downlink joint TCI state can be used for at least one of the following: uplink channel, downlink channel, uplink reference signal, or downlink reference signal.

In some embodiments, based on the discussion in Rel-18, in a Multi Transmission Reception Point (M-TRP) scenario, the unified TCI state for the aperiodic Channel State Information Reference Signal (AP CSI-RS) can have the following two configuration methods: -A) Follow the unified Transmission Configuration Indicator state (unified TCI State, follow unified TCI State). -B) Do not follow the unified TCI state. For method -B), a corresponding TCI state needs to be configured; that is, if it does not follow the unified TCI state, a different TCI state from the unified TCI state needs to be configured. The unified TCI state includes at least one of the indicated joint TCI state, indicated DL TCI state, and indicated UL TCI state.

In some embodiments, there is a time interval between the PDCCH and the AP CSI-RS. If the time interval is too short, for example, less than or equal to a first time threshold, the terminal may be unable to decode the DCI in a timely manner. Therefore, the terminal cannot know the specific AP CSI-RS scheduled by the DCI, nor can it know the TCI state used corresponding to the AP CSI-RS.

In some embodiments, the AP CSI-RS is received by one TCI state.

In some embodiments, if the AP CSI-RS overlaps with the PDSCH, the terminal will use the same TCI state as the PDSCH to receive the AP CSI-RS. It is understood that when the PDSCH has multiple TCI indications, or when two PDSCHs using different TCI states overlap, the terminal needs to determine which TCI state the AP CSI-RS specifically uses for reception.

Based on this, embodiments of the present disclosure propose a quasi co-location assumption (QCL assumption) determination method.

FIG. 2 is an interactive schematic diagram of a quasi co-location assumption determination method according to an embodiment of the present disclosure. As shown in FIG. 2, the embodiment of the present disclosure relates to a quasi co-location determination method, which includes:

Step S2101: A network device 102 sends first indication information to a terminal 101.

In some embodiments, the terminal 101 receives the first indication information.

In some embodiments, the terminal 101 receives the first indication information from the network device 102.

In some embodiments, the first indication information is configured to indicate at least one set of indicated Transmission Configuration Indication State (TCI) states.

At least one set of indicated TCI states is configured to determine a first quasi co-location QCL assumption, the first QCL assumption is a QCL assumption of an aperiodic Channel State Information Reference Signal (AP CSI-RS); a time-domain interval between the AP CSI-RS and a first Physical Downlink Control Channel (PDCCH) that schedules the AP CSI-RS is less than or equal to a first time threshold; the AP CSI-RS is in the same symbol as other downlink signals; a control resource set (CORESET) corresponding to the first PDCCH corresponds to a first control resource set pool index.

In some embodiments, "indicated Transmission Configuration Indication State" can be interchanged with "indicated TCI State".

In some embodiments, "indicated Joint Transmission Configuration Indication State" can be interchanged with "indicated joint TCI State".

In some embodiments, "indicated Downlink Transmission Configuration Indication State" can be interchanged with "indicated DL TCI State" and "indicated Downlink TCI State".

In some embodiments, "indicated Uplink Transmission Configuration Indication State" can be interchanged with "indicated UL TCI State" and "Indicated Uplink TCI State".

In some embodiments, "unified Transmission Configuration Indication State" can be interchanged with "unified TCI State".

In some embodiments, "TCI State", and "Transmission Configuration Indication State" can be interchanged.

In some embodiments, the first indication information includes at least one of the following:

Media Access Control Control Element (MAC CE), or Downlink Control Information (DCI).

In some embodiments, at least one set of indicated TCI states is configured to determine a first quasi co-location (QCL) assumption.

In some embodiments, "QCL assumption" and "QCL assumption" can be used interchangeably.

In some embodiments, the first QCL assumption is the QCL assumption of an aperiodic channel state information reference signal (AP CSI-RS).

In some embodiments, the "QCL assumption" of a signal or channel can be indicated by a TCI state. User equipment or network device can obtain the QCL assumption through the TCI state.

In some embodiments, the time-domain interval between the AP CSI-RS and the first PDCCH is less than or equal to a first time threshold, where the first PDCCH is a PDCCH that schedules the AP CSI-RS.

In some embodiments, the first time threshold can be determined based on beam switch timing.

In some embodiments, a control resource set is configured in the terminal 101.

In some embodiments, the terminal 101 is also configured with other control resource sets, where the other control resource sets correspond to a second control resource set pool index.

In some embodiments, terms such as "send", "transmit", "report", "distribute", "transfer", "bidirectional transmission", "send and/or receive", etc. can be used interchangeably.

In some embodiments, terms such as "acquire", "get", "obtain", "receive", "transmit", "bidirectional transmission", and "send and/or receive" can be used interchangeably, and can be interpreted as receiving from other entities, obtaining from protocols, obtaining from higher layers, obtaining through self-processing, autonomous implementation, etc.

In some embodiments, terms such as "moment", "time point", "time", "time position", etc. can be used interchangeably, as can terms such as "duration", "segment", "time window", "window", "time", etc.

In some embodiments, the names of information, etc., are not limited to those described in the embodiments. Terms such as "information", "message", "signal", "signaling", "report", "configuration", "indication", "instruction", "command", "channel", "parameter", "domain", "field", "symbol", "symbol", "codebook", "codeword", "codepoint", "bit", "data", "program", "chip", etc. can be used interchangeably.

In some embodiments, terms such as "search space", "search space set", "search space configuration", "search space set configuration", "control resource set (CORESET)", "CORESET configuration", etc. can be used interchangeably.

In some embodiments, the terms "precoding", "precoder", "weight", "precoding weight", "quasi co-location (QCL)", "transmission configuration indication (TCI) state", "spatial relation", "spatial domain filter", "transmission power", "phase rotation", "antenna port", "antenna port group", "layer", "the number of layers", "rank", "resource", "resource set", "resource group", "beam", "beam width", "beam angular degree", "antenna", "antenna element", "panel", etc. can be used interchangeably.

In step S2102, the terminal 101 determines two indicated TCI states.

In some embodiments, the terminal 101 determines two indicated TCI states based on first indication information.

In some embodiments, the first indication information indicates at least one set of indicated TCI states.

In some embodiments, the terminal 101 determines two indicated TCI states based on the at least one set of indicated TCI states indicated by the first indication information.

In some embodiments, a set of indicated TCI states includes any one of the following: an indicated joint TCI state; or an indicated downlink TCI state (indicated DL TCI state), and/or an indicated uplink TCI state (indicated UL TCI state).

In some embodiments, the terminal 101 determines at least one set of indicated TCI states based on the first indication information, including at least one of the following: -A) the terminal 101 determines at least one set of indicated TCI states based on a single first indication information. -B) the terminal 101 determines at least one set of indicated TCI states based on multiple first indication information.

For example, regarding -A), if the first indication information for the first time indicates two sets of indicated TCI states, then before the network device 102 sends the first indication information for the second time, the terminal 101 determines the two sets of indicated TCI states based on the first indication information for the first time. That is, it can be understood that the terminal 101 determines the two sets of indicated TCI states based on the two sets of indicated TCI states indicated by the first indication information for the first time.

For example, regarding -B), if the first indication information for the first time indicates two sets of indicated TCI states, and the first indication information for the second time indicates one set or two sets of indicated TCI states, then the indicated one set or two sets of indicated TCI states can, for example, be configured to update one set or two sets of the two indicated TCI states indicated by the first indication information for the first time. Therefore, before the network device 102 issues the first indication information for the third time, the at least one set of indicated TCI states determined by the terminal 101 based on the first indication information may include at least one of the following:
two sets of indicated TCI states indicated by the first indication information for the second time;
one set of indicated TCI states indicated by the first indication information for the second time, and the one set of indicated TCI states not updated by the first indication information for the second time from the two sets of indicated TCI states indicated by the first indication information for the first time. In some embodiments, the terminal determines two indicated TCI states, including the terminal determining two indicated joint TCI states, or the terminal determining two indicated DL TCI states.

In some embodiments, the first indication information satisfies at least one of the following:
- a) The first indication information includes a first Media Access Control Control Element (MAC CE), the first MAC CE is configured to activate at least one set of indicated TCI states; where the at least one set of indicated TCI states corresponds to a code point in the TCI state indication field (transmission configuration indication field) of the downlink control information (DCI).
- b) The first indication information includes a second MAC CE and a first DCI, where the second MAC CE is configured to indicate at least one set of indicated TCI states corresponding to each code point in the multiple code points of the TCI state indication field of the DCI, and the TCI state indication field of the first DCI is configured to indicate one code point among the multiple code points, where one set of indicated TCI states includes the indicated joint TCI state, or one set of indicated TCI states includes the indicated downlink TCI state and/or the indicated uplink TCI state.

In some embodiments, when the first indication information satisfies -b), and after the terminal receives the second MAC CE but before receives the first DCI, the terminal 101 determines two indicated TCI states based on the first indication information, which can be achieved by the terminal 101 determining the two indicated TCI states based on the smallest code point among the multiple code points corresponding to the multiple sets of indicated TCI states. For example, if the smallest code point among the multiple code points indicates two indicated TCI states, then the two indicated TCI states indicated by the smallest code point among the multiple code points are used as the two indicated TCI states determined based on the first indication information.

In some embodiments, the terminal 101 determines at least one set of indicated TCI states based on the first indication information via method -A), where the first indication information satisfies -a) and/or -b).

In some embodiments, the terminal 101 determines at least one set of indicated TCI states based on the first indication information via method -B), where the first indication information satisfies -a) and/or -b).

In some embodiments, the terminal 101 determines two indicated TCI states based on at least one set of indicated TCI states indicated by the first indication information, including at least one of the following: -C) Terminal 101 determines at least one set of indicated TCI states based on single first indication information, and determines two indicated TCI states based on the determined at least one set of indicated TCI states. -D) Terminal 101 determines at least one set of indicated TCI states based on multiple first indication information, and determines two indicated TCI states based on the determined at least one set of indicated TCI states.

In some embodiments, terms such as "codebook", "codeword", "precoding matrix", etc. can be used interchangeably. For example, a codebook can be a collection of one or more codewords/precoding matrices.

In some embodiments, the terms "uplink", "uplink channel", "physical uplink", etc. can be used interchangeably; the terms "downlink", "downlink channel", "physical downlink", etc. can be used interchangeably; and the terms "sidelink", "sidelink channel", "sidelink communication", "sidelink channel communication", "direct link", "direct link channel", "direct communication", "direct link communication", etc. can be used interchangeably.

In some embodiments, the terms "downlink control information (DCI)", "downlink (DL) assignment", "DL DCI", "uplink (UL) grant", "UL DCI", etc. can be used interchangeably.

In some embodiments, the terms "physical downlink shared channel (PDSCH)", "DL data", etc. can be used interchangeably; and the terms "physical uplink shared channel (PUSCH)", "UL data", etc. can be used interchangeably.

Step S2103: the terminal 101 determines a first quasi co-location assumption based on two indicated TCI states.

In some embodiments, the first QCL assumption includes any of the following:
- A) The first QCL assumption is the same as the second QCL assumption, where the second QCL assumption is the QCL assumption for other downlink signals.
- B) The first QCL assumption corresponds to the first indicated TCI state of two indicated TCI states.
- C) The TCI state corresponding to the first QCL assumption is determined based on Radio Resource Control (RRC) configuration.

In the case where the first QCL corresponds to -A), it includes at least one of the following:

In some embodiments, the AP CSI-RS is configured as any of the following:
- a) Follow the unified TCI state. -b) Do not follow the unified TCI state.

In some embodiments, configuring the AP CSI-RS to not follow the unified TCI state can be understood as the AP CSI-RS being configured not following the unified TCI state.

It should be noted that, unless otherwise specified in the present disclosure, "not following the unified TCI state" can be understood as the AP CSI-RS being configured not to follow the unified TCI state. Therefore, to avoid repetition, it will not be described in detail hereafter.

In some embodiments, the unified TCI state is obtained based on DCI signaling indication.

In some embodiments, the unified TCI state is obtained based on MAC CE signaling indication.

It should be noted that, unless otherwise specified in the embodiments of the present disclosure, the unified TCI state can be obtained based on either DCI signaling indication or MAC CE signaling indication. Therefore, to avoid repetition, it will not be described in detail hereafter.

In some embodiments, for case -a), the AP CSI-RS is configured to any one of:
follow the first of two indicated joint TCI states;
follow the second of two indicated joint TCI states;
follow the first of two indicated DL TCI states;
follow the second of two indicated DL TCI states.

In some embodiments, for case -a), the AP CSI-RS may be indicated via RRC to follow either the first or the second of two indicated TCI states.

For example, RRC indicates that the AP CSI-RS follows the first of two indicated joint TCI states, etc.

In some embodiments, for case -a), the first QCL information field (QCL-info) for configuring TCI state of the AP CSI-RS and the second QCL information field for configuring TCI state of the AP CSI-RS may not need to be provided.

It can be understood that, since in case -a), the AP CSI-RS is configured based on RRC indication, the terminal can determine the unified TCI state based on MAC CE or DCI, thereby determining the unified TCI state as the TCI state of the AP CSI-RS. Therefore, the first QCL information field (QCL-info) for configuring the TCI state of the AP CSI-RS and the second QCL information field for configuring the TCI state of the AP CSI-RS do not need to be provided.

In some embodiments, for case -b), the AP CSI-RS is configured to any one of:
not follow the first of two indicated joint TCI states;
not follow the second of two indicated joint TCI states;
not follow the first of two indicated DL TCI states;
not follow the second of two indicated DL TCI states.

In some embodiments, for case -b), the AP CSI-RS can be indicated via RRC to specifically not follow the first or second of the indicated TCI states.

For example, the RRC indicates that the AP CSI-RS does not follow the first of two indicated joint TCI states, etc.

In some embodiments, for case -b), the first QCL information field (QCL-info) in the RRC configures the TCI state of the AP CSI-RS, or the second QCL information field configures the TCI state of the AP CSI-RS. For example, it is indicated by the RRC.

In some embodiments, other downlink signals include at least one of the following: a physical downlink shared channel (PDSCH) scheduled by a second PDCCH; AP CSI-RS scheduled by a third PDCCH; periodic CSI-RS; semi-persistent CSI-RS; where the time-domain interval between the PDSCH and the second PDCCH is greater than or equal to a second time threshold; the time-domain interval between the AP CSI-RS scheduled by the third PDCCH and the third PDCCH is greater than a first time threshold; and the control resource set pool index of the control resource set corresponding to the second PDCCH or the third PDCCH is a first control resource set pool index.

In some embodiments, the two indicated TCI states correspond one-to-one with two control resource set pool indices. The first indicated TCI state corresponds to the indicated TCI state of the first control resource set pool index, and the second indicated TCI state corresponds to the indicated TCI state of the second control resource set pool index. The first control resource set pool index is 0, and the second control resource set pool index is 1; or the first control resource set pool index is 1, and the second control resource set pool index is 0.

In some embodiments, the second time threshold is determined based on the time duration for QCL.

In some embodiments, the control resource set pool index of the control resource set corresponding to the second PDCCH is the first control resource set pool index.

In some embodiments, the control resource set pool index of the control resource set corresponding to the third PDCCH is the first control resource set pool index.

It is understood that when the control resource set pool index corresponding to the second or third PDCCH is the first control resource set pool index, it is determined that the AP CSI-RS can only overlap with other downlink signals corresponding to the same control resource set pool index; that is, AP CSI-RS cannot be triggered across control resource set pool indices.

In some embodiments, different control resource set pool indices correspond to different TRPs, and different TRPs can correspond to the same serving cell or different cells.

In some embodiments, different TRPs corresponding to different cells include: a part of the TRPs belong to the serving cell, and another part of the TRPs belong to cells different from the serving cell.

In the case of the first QCL corresponding to -B), at least one of the following is included:

In some embodiments, the TCI state of the AP CSI-RS is not configured to follow a unified TCI state.

In some embodiments, the AP CSI-RS is configured to any one of:
not follow the first of two indicated joint TCI states;
not follow the second of two indicated joint TCI states;
not follow the first of two indicated DL TCI states;
not follow the second of two indicated DL TCI states.

In some embodiments, the AP CSI-RS may be indicated specifically not to follow the first or the second of indicated TCI states via an RRC.

For example, the RRC indicates that the AP CSI-RS does not follow the first of two indicated joint TCI states, etc.

In some embodiments, a first QCL information field (QCL-info) in the RRC configures the TCI state of the AP CSI-RS, or a second QCL information field in the RRC configures the TCI state of the AP CSI-RS. For example, it is indicated by the RRC, etc.

In some embodiments, other downlink signals include: a first PDSCH and a second PDSCH; the first PDSCH and the second PDSCH satisfy at least one of the following: the time-domain interval between the first PDSCH and the fourth PDCCH is greater than or equal to a second time threshold, where the fourth PDCCH is the PDCCH that schedules the first PDSCH; the time-domain interval between the second PDSCH and the fifth PDCCH is greater than or equal to the second time threshold, where the fifth PDCCH is the PDCCH that schedules the second PDSCH; the control resource set pool index of the control resource set corresponding to the fourth PDCCH is different from the control resource set pool index of the control resource set corresponding to the fifth PDCCH; the first PDSCH corresponds to the first indicated joint TCI state or the first indicated DL TCI state; the second PDSCH corresponds to the second indicated joint TCI state or the second indicated DL TCI state.

In some embodiments, the AP CSI-RS is in the same symbol as other downlink signals, which may include: the AP CSI-RS being in the same symbol as the first PDSCH and the second PDSCH.

In some embodiments, the first PDSCH and the second PDSCH may be in the same symbol or in different symbols.

In some embodiments, other downlink signals satisfy the following conditions: the time-domain interval between the first PDSCH and the fourth PDCCH is greater than or equal to a second time threshold, where the fourth PDCCH is the PDCCH that schedules the first PDSCH; and the time-domain interval between the second PDSCH and the fifth PDCCH is greater than or equal to the second time threshold, where the fifth PDCCH is the PDCCH that schedules the second PDSCH; and the control resource set pool index of the control resource set corresponding to the fourth PDCCH is different from the control resource set pool index of the control resource set corresponding to the fifth PDCCH; and the first PDSCH corresponds to the first indicated joint transmission configuration indication state or the first indicated downlink transmission configuration indication state (indicated DL TCI state); and the second PDSCH corresponds to the second indicated joint transmission configuration indication state or the second indicated downlink transmission configuration indication state.

For example, the control resource set pool index corresponding to the indicated TCI state includes at least one of the following:
the first indicated joint TCI state corresponding to a first control resource set pool index, or the first indicated DL TCI state corresponding to a first control resource set pool index;
the second indicated joint TCI state corresponding to a second control resource set pool index, or the second indicated DL TCI state corresponding to a second control resource set pool index;
the first indicated joint TCI state corresponding to a second control resource set pool index, or the first indicated DL TCI state corresponding to a second control resource set pool index;
the second indicated joint TCI state corresponding to a first control resource set pool index, or the second indicated DL TCI state corresponding to a first control resource set pool index.

For example, the control resource set pool index corresponding to the TRP includes at least one of the following:
the first control resource set pool index corresponding to a first TRP, and the second control resource set pool index corresponding to a second TRP;
the first control resource set pool index corresponding to a second TRP, and the second control resource set pool index corresponds to a first TRP.

For example, the first PDSCH is sent by the first TRP, and the second PDSCH is sent by the second TRP; or the first PDSCH is sent by the second TRP, and the second PDSCH is sent by the first TRP.

In the case where the first QCL corresponds to -C), it includes at least one of the following:

In some embodiments, the RRC configuration includes any one of the following:
- a) The RRC configuring AP CSI-RS to follow the first indicated TCI state.
- b) The RRC configuring AP CSI-RS to follow the second indicated TCI state.
- c) The RRC configuring AP CSI-RS to follow the first unified TCI state.
- d) The RRC configuring AP CSI-RS to follow the second unified TCI state.

It is understood that if the indicated TCI state corresponding to AP CSI-RS is configured based on RRC signaling, AP CSI-RS decoding can be performed based on the indicated TCI state configured by RRC.

In some embodiments, for case -a), the RRC configures AP CSI-RS as any of the following:
following the first of two indicated joint TCI states;
following the first of two indicated DL TCI states.

In some embodiments, for case -b), the RRC configures AP CSI-RS as any of the following:
following the second of two indicated joint TCI states;
following the second of two indicated DL TCI states.

In some embodiments, the first QCL information field (QCL-info) for configuring the TCI state of the AP CSI-RS and the second QCL information field for configuring the TCI state of the AP CSI-RS configuration do not need to be provided.

In some embodiments, other downlink signals include: a first PDSCH and a second PDSCH; the first PDSCH and the second PDSCH satisfy at least one of the following: the time-domain interval between the first PDSCH and the fourth PDCCH is greater than or equal to a second time threshold, where the fourth PDCCH is the PDCCH that schedules the first PDSCH; the time-domain interval between the second PDSCH and the fifth PDCCH is greater than or equal to the second time threshold, where the fifth PDCCH is the PDCCH that schedules the second PDSCH; the control resource set pool index of the control resource set corresponding to the fourth PDCCH is different from the control resource set pool index of the control resource set corresponding to the fifth PDCCH; the first PDSCH corresponds to the first indicated joint TCI state or the first indicated DL TCI state; the second PDSCH corresponds to the second indicated joint TCI state or the second indicated DL TCI state.

In some embodiments, the AP CSI-RS is in the same symbol as other downlink signals, which may include the AP CSI-RS being in the same symbol as the first PDSCH and the second PDSCH.

In some embodiments, the first PDSCH and the second PDSCH may be in the same symbol or in different symbols.

In some embodiments, other downlink signals satisfy the following conditions: the time-domain interval between the first PDSCH and the fourth PDCCH is greater than or equal to a second time threshold, where the fourth PDCCH is the PDCCH that schedules the first PDSCH; and the time-domain interval between the second PDSCH and the fifth PDCCH is greater than or equal to the second time threshold, where the fifth PDCCH is the PDCCH that schedules the second PDSCH; and the control resource set pool index of the control resource set corresponding to the fourth PDCCH is different from the control resource set pool index of the control resource set corresponding to the fifth PDCCH; and the first PDSCH corresponds to the first indicated joint transmission configuration indication state or the first indicated downlink transmission configuration indication state (indicated DL TCI state); and the second PDSCH corresponds to the second indicated joint transmission configuration indication state or the second indicated downlink transmission configuration indication state.

It is understood that while receiving CSI-RS, the terminal needs to receive two PDSCHs on the same symbol using two indicated TCI states. Therefore, the terminal needs to buffer the CSI-RS using two indicated TCI states on the same symbol. After the terminal decodes the DCI scheduling the CSI-RS, it knows DCI schedules which CSI-RS. For CSI-RS configured by RRC not to follow unified TCI state, the terminal then knows that the CSI-RS is configured by RRC not to follow unified TCI state. However, since the terminal only uses two indicated TCI states to buffer the CSI-RS, the terminal can only use the first or second of the two indicated TCI states to receive the CSI-RS. For example, in this case, it can be determined that the CSI-RS uses the first of the two indicated TCI states for reception. For CSI-RS configured by RRC to follow unified TCI state, after decoding the DCI scheduling CSI-RS, the terminal then knows that the CSI-RS is configured by RRC to follow unified TCI state. For example, if CSI-RS is configured to follow a first indicated TCI state, and the terminal uses two indicated TCI states to buffer the CSI-RS, then the terminal receives the CSI-RS using the first indicated TCI state configured by RRC to follow; or, for example, if CSI-RS is configured to follow the second indicated TCI state, and the terminal uses two indicated TCI states to buffer the CSI-RS, then the terminal receives the CSI-RS using the second indicated TCI state configured by RRC to follow.

The communication method involved in the embodiments of the present disclosure may include at least one of steps S2101 to S2103. For example, step S2102 can be implemented as a standalone embodiment, step S2103 can be implemented as a standalone embodiment, and steps S2101+S2102+S210 can be implemented as standalone embodiments, but are not limited thereto.

In some embodiments, terms such as "certain", "preset", "default", "set", "indicated", "particular", "any" and "first" can be interchanged. "Certain A", "preset A", "default A", "set A", "indicated A", "particular A", "any A", and "first A" can be interpreted as A pre-defined in a protocol, etc., or as A obtained through setting, configuration, or indication, etc., or as certain A, particular A, set A, any A, or first A, etc., but are not limited thereto.

In some embodiments, steps S2101 and S2102 can be interchanged or executed simultaneously, steps S2102 and S2103 can be interchanged or executed simultaneously, and steps S2101 and S2103 can be interchanged or executed simultaneously.

In some embodiments, steps S2101 and S2102 are optional, and one or more of these steps may be omitted or substituted in different embodiments.

In some embodiments, steps S2101 and S2103 are optional, and one or more of these steps may be omitted or substituted in different embodiments.

In some embodiments, steps S2102 and S2103 are optional, and one or more of these steps may be omitted or substituted in different embodiments.

In some embodiments, other optional implementations described before or after the specification corresponding to FIG. 2 may be referred to.

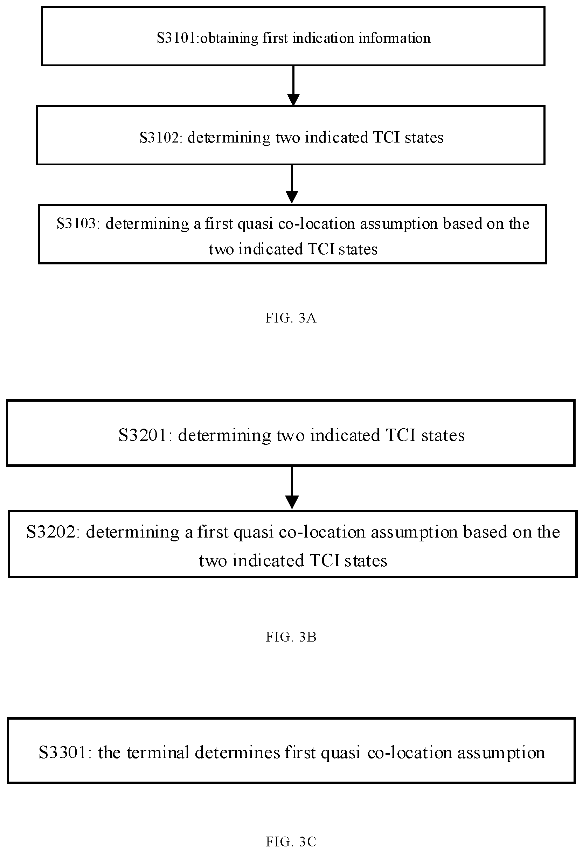

In some embodiments, FIG. 3A is a flowchart illustrating a quasi co-location assumption determination method according to an embodiment of the present disclosure. As shown in FIG. 3A, the embodiments of the present disclosure relate to a quasi co-location assumption determination method, which includes:
Step S3101, obtaining first indication information.

In some embodiments, the terminal 101 receives first information sent by the network device 102, but is not limited thereto, and may also receive first information sent by other entities.

In some embodiments, the terminal 101 obtains first information defined by a protocol.

In some embodiments, the terminal 101 obtains first information from upper layer(s).

In some embodiments, the terminal 101 processes to obtain the first information.

In some embodiments, step S3101 is omitted, and the terminal 101 autonomously implements the function indicated by the first information, or the function is default or set to default.

Optional implementations of step S3101 can be found in the optional implementations of step S2101 in FIG. 2 and other related parts in the embodiments involved in FIG. 2, and will not be repeated here.

Step S3102: determining two indicated TCI states.

Optional implementations of step S3102 can be found in the optional implementations of step S2102 in FIG. 2 and other related parts in the embodiments involved in FIG. 2, and will not be repeated here.

Step S3103: determining a first quasi co-location assumption based on the two indicated TCI states.

Optional implementations of step S3103 can be found in the optional implementations of step S2103 in FIG. 2 and other related parts in the embodiments involved in FIG. 2, and will not be repeated here.

The communication method involved in the embodiments of the present disclosure may include at least one of steps S3101 to S3103. For example, step S3101, step S3102, step S3103, step S3101 + S3102, step S3101 + S3103, step S3101 + S3103, and step S3101 + S3102 + S3103 can all be implemented as independent embodiments, but are not limited thereto.

In some embodiments, steps S3102 and S3103 may be executed in an interchangeable order or simultaneously, and steps S3101 and S3103 may be executed in an interchangeable order or simultaneously.

In some embodiments, steps S3101 and S3103 are optional, and one or more of these steps may be omitted or substituted in different embodiments.

In some embodiments, steps S3102 and S3103 are optional, and one or more of these steps may be omitted or substituted in different embodiments.

In some embodiments, FIG. 3B is a flowchart illustrating a quasi co-location assumption determination method according to an embodiment of the present disclosure. As shown in FIG. 3B, the embodiment of the present disclosure relates to a quasi co-location assumption determination method, which includes:
Step S3201, determining two indicated TCI states.

Optional implementations of step S3201 can be found in steps S2101 and S2102 of FIG. 2, optional implementations of steps S3101 and S3102 of FIG. 3A, and other related parts in the embodiments involved in FIG. 2 and FIG. 3A, which will not be repeated here.

Step S3202, determining a first quasi co-location assumption based on the two indicated TCI states.

Optional implementations of step S3202 can be found in step S2103 of FIG. 2 and step S3103 of FIG. 3A, as well as other related parts in the embodiments involved in FIG. 2 and FIG. 3A, and will not be repeated here.

The communication method involved in the embodiments of the present disclosure may include at least one of steps S3201 to S3202. For example, step S3201 may be implemented as a standalone embodiment, and step S3202 may be implemented as a standalone embodiment, but is not limited thereto.

In some embodiments, step S3201 is optional, and one or more of these steps may be omitted or substituted in different embodiments.

In the embodiments of the present disclosure, step S3201 may be combined with steps S3102-S3103 of FIG. 3A, and step S3202 may be combined with steps S3101, S3102, and S3103 of FIG. 3A.

FIG. 3C is a schematic flowchart illustrating a quasi co-location assumption determination method according to an embodiment of the present disclosure. As shown in FIG. 3C, the embodiment of the present disclosure relates to a method for determining quasi co-location assumptions. The method includes:
Step S3301, the terminal determines a first quasi co-location assumption.

Optional implementations of step S3301 can be found in steps S2101, S2102, and S2103 of FIG. 2, steps S3101, S3102, and S3103 of FIG. 3A, steps S3201 and S3202 of FIG. 3B, and other related parts in the embodiments involved in FIG. 2, FIG. 3A, and FIG. 3B, which will not be repeated here.

In some embodiments, the first QCL assumption is the QCL assumption of the aperiodic channel state information reference signal AP CSI-RS, where the time-domain interval between AP CSI-RS and the first physical downlink control channel PDCCH that schedules AP CSI-RS is less than or equal to a first time threshold; AP CSI-RS is in the same symbol as other downlink signals; and the control resource set CORESET corresponding to the first PDCCH corresponds to the first control resource set pool index.

In some embodiments, the first QCL assumption is the same as a second QCL assumption, where the second QCL assumption is the QCL assumption of the other downlink signals.

In some embodiments, the first QCL assumption corresponds to the first indicated TCI state of two indicated Transmission Configuration Indication states (indicated TCI states).

In some embodiments, the TCI state corresponding to the first QCL assumption is determined based on the Radio Resource Control (RRC) configuration; where the TCI state corresponding to the first QCL assumption includes any one of the following: corresponding to the first indicated TCI state of two indicated TCI states; or corresponding to the second indicated TCI state of two indicated TCI states.

In some embodiments, the indicated TCI state includes: an indicated joint TCI state, or an indicated downlink TCI state (indicated DL TCI state).

In some embodiments, the AP CSI-RS is configured to any one of: following the unified TCI state; or not following the unified TCI state.

In some embodiments, other downlink signals include at least one of the following: a Physical Downlink Shared Channel (PDSCH) scheduled by a second PDCCH; an AP CSI-RS scheduled by a third PDCCH; a periodic CSI-RS; a semi-persistent CSI-RS; where the time-domain interval between the PDSCH and the second PDCCH is greater than or equal to a second time threshold; the time-domain interval between the AP CSI-RS scheduled by the third PDCCH and the third PDCCH is greater than a first time threshold; and the control resource set pool index of the control resource set corresponding to the second PDCCH or the third PDCCH is a first control resource set pool index.

In some embodiments, the TCI state of the AP CSI-RS is not configured to follow the unified TCI state.

In some embodiments, the RRC configuration includes any one of the following: RRC configures the AP CSI-RS to follow a first indicated TCI state; RRC configures the AP CSI-RS to follow a second indicated TCI state.

In some embodiments, other downlink signals include: a first PDSCH and a second PDSCH; the first PDSCH and the second PDSCH satisfy at least one of the following: the time-domain interval between the first PDSCH and the fourth PDCCH is greater than or equal to a second time threshold, where the fourth PDCCH is the PDCCH that schedules the first PDSCH; the time-domain interval between the second PDSCH and the fifth PDCCH is greater than or equal to the second time threshold, where the fifth PDCCH is the PDCCH that schedules the second PDSCH; the control resource set pool index of the control resource set corresponding to the fourth PDCCH is different from the control resource set pool index of the control resource set corresponding to the fifth PDCCH; the first PDSCH corresponds to the first indicated joint TCI state or the first indicated DL TCI state; the second PDSCH corresponds to the second indicated joint TCI state or the second indicated DL TCI state.

In some embodiments, two indicated TCI states are determined based on first indication information, where the first indication information satisfies at least one of the following: the first indication information includes a first Media Access Control Control Element (MAC CE), the first MAC CE being configured to activate at least one set of indicated TCI states; the at least one set of indicated TCI states corresponds to a code point in the TCI state indication field of the downlink control information (DCI); or the first indication information includes a second MAC CE and a first DCI, where the second MAC CE is configured to indicate at least one set of indicated TCI states corresponding to each code point in the plurality of code points in the DCI TCI state indication field, and the TCI state indication field of the first DCI is configured to indicate one code point in the plurality of code points, where one set of indicated TCI states includes an indicated joint TCI state, or one set of indicated TCI states includes an indicated downlink TCI state and/or an indicated uplink TCI state.

In some embodiments, the AP CSI-RS is a CSI-RS for CSI measurement or a CSI-RS for beam management.

In the embodiment of the present disclosure, step S3301 can be combined with steps S3102-S3103 of FIG. 3A, and step S3301 can be combined with step S3202 of FIG. 3B.

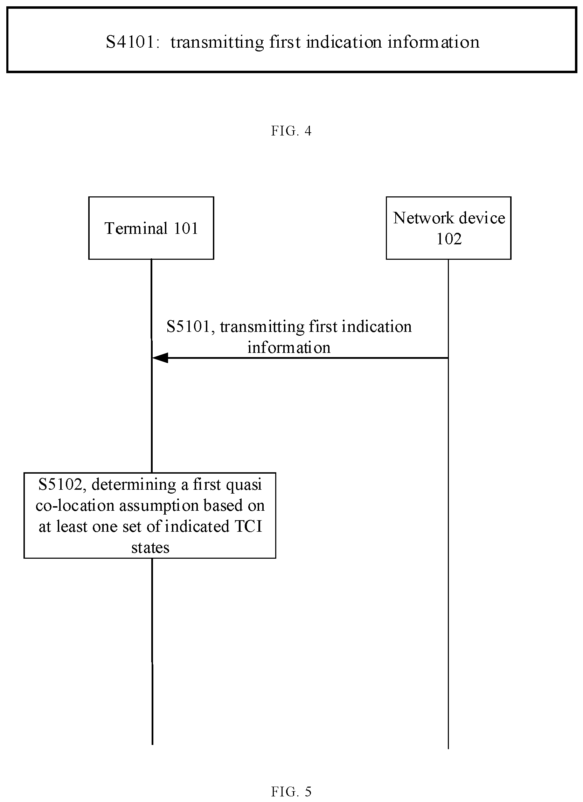

FIG. 4 is a flowchart illustrating the quasi co-location assumption determination method according to an embodiment of the present disclosure. As shown in FIG. 4, the embodiment of the disclosure relates to a communication method, which includes:
Step S4101, transmitting first indication information.

Optional implementations of step S4101 can be found in step S2101 of FIG. 2, optional implementations of step S3101 of FIG. 3A, and other related parts in the embodiments involved in FIG. 2 and FIG. 3A, which will not be repeated here.

In some embodiments, the first indication information is configured to indicate at least one set of indicated Transmission Configuration Indication states (indicated TCI states).

The at least one set of indicated TCI states is used by the terminal to determine a first quasi co-location QCL assumption, and the first quasi co-location QCL assumption is the QCL assumption of the aperiodic Channel State Information Reference signal (AP CSI-RS). The time-domain interval between the AP CSI-RS and the first Physical Downlink Control Channel (PDCCH) that schedules the AP CSI-RS is less than or equal to a first time threshold; the AP CSI-RS is in the same symbol as other downlink signals; and the control resource set (CORESET) corresponding to the first PDCCH corresponds to the first control resource set pool index.

In some embodiments, the first QCL assumption is the same as a second QCL assumption, where the second QCL assumption is the QCL assumption of the other downlink signals.

In some embodiments, the first QCL assumption corresponds to the first indicated TCI state among two indicated transmission configuration indication states (indicated TCI states).

In some embodiments, Radio Resource Control (RRC) configuration signaling is transmitted to indicate the TCI state corresponding to the first QCL assumption; where the TCI state corresponding to the first QCL assumption includes any one of the following: the first indicated TCI state of the two indicated TCI states; or the second indicated TCI state of the two indicated TCI states.

In some embodiments, the indicated TCI state includes the indicated joint TCI state, or the indicated downlink TCI state (DL TCI state).

In some embodiments, Radio Resource Control (RRC) configuration signaling is transmitted to indicate that the AP CSI-RS follows the unified TCI state or does not follow the unified TCI state.

In some embodiments, other downlink signals include at least one of the following: a Physical Downlink Shared Channel (PDSCH) scheduled by a second PDCCH; an AP CSI-RS scheduled by a third PDCCH; a periodic CSI-RS; a semi-persistent CSI-RS; where the time-domain interval between the PDSCH and the second PDCCH is greater than or equal to a second time threshold; the time-domain interval between the AP CSI-RS scheduled by the third PDCCH and the third PDCCH is greater than the first time threshold; and the control resource set pool index of the control resource set corresponding to the second PDCCH or third PDCCH is a first control resource set pool index.

In some embodiments, Radio Resource Control (RRC) configuration signaling is transmitted, indicating that the TCI state of the AP CSI-RS does not follow unified TCI state.

In some embodiments, the RRC configuration includes any one of the following: the RRC configures the AP CSI-RS to follow a first indicated TCI state; the RRC configures the AP CSI-RS to follow a second indicated TCI state.

In some embodiments, other downlink signals include: a first PDSCH and a second PDSCH; the first PDSCH and the second PDSCH satisfy at least one of the following: the time-domain interval between the first PDSCH and the fourth PDCCH is greater than or equal to a second time threshold, where the fourth PDCCH is the PDCCH that schedules the first PDSCH; the time-domain interval between the second PDSCH and the fifth PDCCH is greater than or equal to the second time threshold, where the fifth PDCCH is the PDCCH that schedules the second PDSCH; the control resource set pool index of the control resource set corresponding to the fourth PDCCH is different from the control resource set pool index of the control resource set corresponding to the fifth PDCCH; the first PDSCH corresponds to the first indicated joint TCI state or the first indicated DL TCI state; the second PDSCH corresponds to the second indicated joint TCI state or the second indicated DL TCI state.

In some embodiments, the first indication information satisfies at least one of the following: the first indication information includes a first Media Access Control Control Element (MAC CE), the first MAC CE being configured to activate at least one set of indicated TCI states; the at least one set of indicated TCI states corresponds to a code point in the TCI state indication field of the downlink control information (DCI); or the first indication information includes a second MAC CE and a first DCI, where the second MAC CE is configured to indicate at least one set of indicated TCI states corresponding to each code point in the plurality of code points in the DCI TCI state indication field, and the TCI state indication field of the first DCI is configured to indicate one code point in the plurality of code points, where one set of indicated TCI states includes an indicated uplink/downlink joint TCI state, or one set of indicated TCI states includes an indicated downlink TCI state and/or an indicated uplink TCI state.

In some embodiments, the AP CSI-RS is a CSI-RS for CSI measurement or a CSI-RS for beam management.

FIG. 5 is an interactive schematic diagram of a quasi co-location assumption determination method according to an embodiment of the present disclosure. As shown in FIG. 5, the embodiment of the present disclosure relates to a quasi co-location assumption determination method. The method includes:
Step S5101: the network device 102 sends first indication information.

In some embodiments, the first indication information is configured to indicate at least one set of indicated Transmission Configuration Indication states (indicated TCI states).

Optional implementations of step S5101 can be found in steps S2101 of FIG. 2, S3101 of FIG. 3A, and other related parts in the embodiments involved in FIG. 2 and FIG. 3A, which will not be repeated here.

Step S5102: the terminal 101 determines a first quasi co-location (QCL) assumption based on at least one set of indicated TCI states.

In some embodiments, the first QCL assumption is the QCL assumption of the aperiodic Channel State Information Reference Signal (AP CSI-RS);

The time-domain interval between AP CSI-RS and the first Physical Downlink Control Channel (PDCCH) that schedules AP CSI-RS is less than or equal to a first time threshold; AP CSI-RS is in the same symbol as other downlink signals; and the control resource set (CORESET) corresponding to the first PDCCH corresponds to the first control resource set pool index.

Optional implementations of step S5102 can be found in the optional implementations of steps S2102 and S2103 in FIG. 2, steps S3102 and S3103 in FIG. 3A, steps S3201 in FIG. 3B, and steps S3301 in FIG. 3C, as well as other related parts in the embodiments involved in FIG. 2, FIG. 3A, FIG. 3B, and FIG. 3C, which will not be repeated here.

In some embodiments, the above method may include the methods described in the embodiments on the communication system side, terminal side, network device side, etc., which will not be repeated here.

The embodiments of the present disclosure also provide a communication method for determining the unified TCI state of an aperiodic Channel State Information-Reference Signal (aperiodic CSI-RS) resource when the time domain interval between the aperiodic CSI-RS resource and its scheduling Physical Downlink Control Channel (PDCCH) is less than or equal to a first threshold and the aperiodic CSI-RS resource overlaps with a Physical Downlink Shared Channel (PDSCH), in the scenario of unified Transmission Configuration Indicator state (unified TCI state) indication for Multi-Downlink Control Information (Multi-DCI) and Multiple Transmission Reception Points (Multi-TRP), so as to improve the transmission flexibility of aperiodic CSI-RS resources based on the unified TCI state.

In some embodiments, the terminal determines the QCL assumption of the aperiodic CSI-RS resource as the first QCL assumption, where the interval between the AP CSI-RS and PDCCH is less than a threshold value (e.g., beamSwitchTiming), the AP CSI-RS overlaps with other DL signals, and the terminal's multiple CORESETs (first control resource sets) correspond to different CORESETPoolIndex (first control resource set pool indexes).

In some embodiments, the first QCL assumption is the same as the QCL assumption for other DL signals.

In some embodiments, the AP CSI-RS can be configured to follow unified TCI-state. For example, the RRC configures the AP CSI-RS to follow any of the following: the first indicated joint TCI state; the first DL TCI state; the second indicated joint TCI state; or the second DL TCI state.

In some embodiments, "DL TCI state", "indicated DL TCI state", and "indicated downlink TCI state" can be interchanged.

In some embodiments, if the AP CSI-RS is configured to follow unified TCI-state, the TCI state corresponding to the qcl-info and qcl-info2 fields configuring the AP CSI-RS does not need to be specified.

In some embodiments, the AP CSI-RS may not be configured to follow unified TCI-state. For example, the RRC may not configure the AP CSI-RS to follow any of the following: the first indicated joint TCI state; the first DL TCI state; the second indicated joint TCI state; or the second DL TCI state.

In some embodiments, if the AP CSI-RS is not configured to follow unified TCI-state, the TCI state corresponding to the qcl-info and qcl-info2 fields is specified.

In some embodiments, other downlink signal (other DL signal) is PDSCH scheduled by PDCCH (with an interval greater than timeDurationForQCL from its own PDCCH), or AP CSI-RS scheduled by PDCCH (with an interval greater than beam switch timing from its own PDCCH).

In some embodiments, for other DL signal that is a PDSCH scheduled by PDCCH, the CORESET Pool Index of the CORESET corresponding to the PDSCH is the same as the first control resource set pool index.

It can be understood that, based on this, the AP CSI-RS is restricted to overlapping only with other DL signals corresponding to the same CORESET Pool Index. That is, AP CSI-RS cannot be triggered across CORESET Pool Indexes. Different CORESET Pool Indexes actually correspond to different TRPs. Different TRPs can be in the same cell (the same serving cell) or in different cells: one is for the serving cell, and the other is for a non-serving cell.

In some embodiments, other sidelink signals (other SL signals) are periodic CSI-RS or semi-persistent CSI-RS.

In some embodiments, the first QCL assumption is the first indicated joint TCI state or the first DL TCI state.

In some embodiments, the AP CSI-RS may not be configured to follow unified TCI-state (e.g., the TCI state corresponding to the qcl-info and qcl-info2 fields of the AP CSI-RS configured by RRC).

In some embodiments, the Other DL signal includes two PDSCHs, and the two PDSCHs satisfy at least one of the following:
the intervals between the two PDSCHs and their respective PDCCHs are greater than or equal to a threshold (time Duration For QCL);
the CORESETs of the respective PDCCHs of the two PDSCHs corresponds to different CORESETPoolIndex values;
and one PDSCH uses the first indicated joint TCI state or the first DL TCI state, while the other PDSCH uses the second indicated joint TCI state or the second DL TCI state.

In some embodiments, the first QCL assumption is the first indicated joint TCI state, or the first DL TCI state, or the second indicated joint TCI state, or the second DL TCI state configured by RRC.

In some embodiments, the AP CSI-RS can be configured to follow unified TCI-state (e.g., RRC configures AP CSI-RS to follow the first indicated joint TCI state, or the first DL TCI state, or the second indicated joint TCI state, or the second DL TCI state).

In some embodiments, when AP CSI-RS can be configured to follow unified TCI-state, the TCI state corresponding to the qcl-info and qcl-info2 fields configuring the AP CSI-RS does not need to be specified.

In some embodiments, the Other DL signal includes two PDSCHs, and the two PDSCHs satisfy at least one of the following:
the intervals between the two PDSCHs and their respective PDCCHs are greater than or equal to a threshold (time Duration For QCL);
the CORESETs of the respective PDCCHs of the two PDSCHs corresponds to different CORESETPoolIndex values;
and one PDSCH uses the first indicated joint TCI state or the first DL TCI state, while the other PDSCH uses the second indicated joint TCI state or the second DL TCI state.

It can be understood that, since the terminal already needs to use two indicated joint/DL TCI states to buffer received data or signals on the resources, after DCI decoding, it will know which AP CSI-RS corresponds to the one scheduled by DCI. If it is configured to specify which indicated joint/DL TCI state is used for this AP CSI-RS based on the RRC signaling, then AP CSI-RS decoding can be performed based on the indicated joint/DL TCI state configured by the RRC.

In some embodiments, where:
the first indicated joint TCI state or the first DL TCI state is the first one of two indicated joint TCI states or two DL TCI states determined by the terminal;
the second indicated joint TCI state or the second DL TCI state is the second one of two indicated joints or two DL TCI states determined by the terminal;
the two indicated joint TCI states or two DL TCI states may be indicated by MAC CE and/or DCI, where MAC CE indicates one or two indicated joint TCI states, or one or two DL TCI states, corresponding to at least one codepoint corresponding to a DCI indication field, and DCI indicates one codepoint among a plurality of codepoints.

In some embodiments, MAC CE further indicates whether each indicated joint TCI state or each DL TCI state corresponds to the first one or the second one.

In some embodiments, the terminal determines two indicated joint TCI states or two DL TCI states.

In some embodiments, the terminal determines two indicated joint TCI states or two DL TCI states based on:
receiving first indication information, and determining two indicated joint TCI states or two DL TCI states based on the first indication information.

In some embodiments, the first indication information includes MAC CE and/or DCI, and the first indication information indicates N sets of TCI states, where N is an integer greater than or equal to 1.

In some embodiments, the N sets of TCI states can be determined based on the first indication information for multiple times. For example, if the first indication information for the first time indicates two sets, then before the first indication information for the second time arrives, the N sets of TCI states are the two sets indicated by the first indication information; if the first indication information for the second time indicates one set, for example, updating the first set in the first indication information, then before the first indication information for the third time arrives, the N sets of TCI states may only include the first set of TCI states in the first indication information for the second time.

In some embodiments, the N sets of TCI states may only include the first set of TCI states in the first indication information for the second time, or the N sets of TCI states may include the first set of TCI states in the first indication information for the second time and the second set of TCI states in the first indication information for the first time.

In some embodiments, when the first indication information is DCI, the first indication information has not been received, but MAC CE has been received, and MAC CE is configured to activate the N sets of TCI states corresponding to one or more codepoints of the TCI state field of the DCI, the N sets of TCI states are determined. In this case, each set of TCI states can be determined to include a joint TCI state, or each set of TCI states can include at least one of DL TCI state and UL TCI state, based on multiple sets of TCI states corresponding to a single codepoint, or N sets of TCI states corresponding to the smallest codepoint among codepoints of multiple sets of TCI states.

In some embodiments, the AP CSI-RS can be a Channel State Information Reference Signal Resource (CSI-RS resource) for CSI measurement or beam management.

The embodiments of the present disclosure provide a method for configuring and determining the unified TCI state of the aperiodic CSI-RS resource in a terminal with unified TCI state in multi-DCI and multi-TRP, improving M-TRP transmission performance.

In the embodiments of the present disclosure, some or all steps, and their optional implementations, can be arbitrarily combined with some or all steps in other embodiments, or arbitrarily combined with optional implementations in other embodiments.

The embodiments of the present disclosure also provide a device for implementing any of the above methods. For example, a device is provided, which includes units or modules for implementing the steps performed by the terminal in any of the above methods. For example, another device is provided, which includes units or modules for implementing the steps performed by the network device (e.g., access network device, core network functional node, core network device, etc.) in any of the above methods.

It should be understood that the division of units or modules in the above device is only a logical functional division. In actual implementation, they can be fully or partially integrated into a single physical entity, or they can be physically separated. Furthermore, the units or modules in the device can be implemented by a processor calling software: for example, the device includes a processor connected to a memory containing instructions. The processor calls the instructions stored in the memory to implement any of the above methods or to implement the functions of the units or modules in the above device. The processor can be, for example, a general-purpose processor, such as a Central Processing Unit (CPU) or a microprocessor, and the memory can be internal or external to the device. Alternatively, the units or modules in the device can be implemented in the form of hardware circuits. The functions of some or all units or modules can be achieved through the design of the hardware circuits, which can be understood as one or more processors. For example, in one implementation, the hardware circuit is an application-specific integrated circuit (ASIC). The functions of some or all of the units or modules are achieved through the design of the logical relationships between the components within the circuit. In another implementation, the hardware circuit can be implemented using a programmable logic device (PLD), such as a field-programmable gate array (FPGA). This PLD can include a large number of logic gates, and the connection relationships between the logic gates are configured through configuration files to achieve the functions of some or all of the units or modules. All units or modules of the above device can be implemented entirely through processor-called software, entirely through hardware circuits, or partially through processor-called software with the remaining parts implemented through hardware circuits.

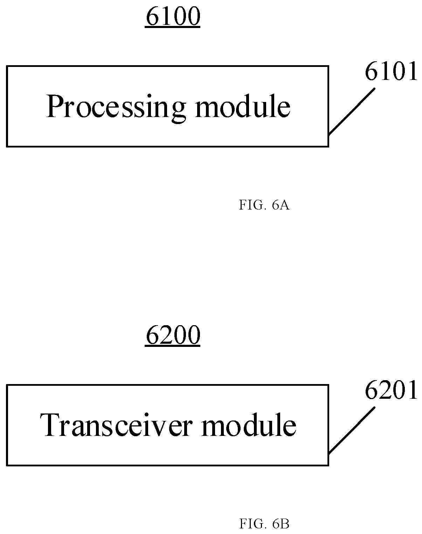

FIG. 6A is a schematic diagram of a structure of a terminal provided in an embodiment of the present disclosure. As shown in FIG. 6A, the terminal 6100 may include a processing module 6101. In some embodiments, the processing module is configured to determine a first quasi co-located QCL assumption, where the first QCL assumption is a QCL assumption of an aperiodic channel state information reference signal AP CSI-RS; where a time-domain interval between the AP CSI-RS and a first physical downlink control channel PDCCH that schedules the AP CSI-RS is less than or equal to a first time threshold; the AP CSI-RS is in the same symbol as other downlink signals; and a control resource set CORESET corresponding to the first PDCCH corresponds to a first control resource set pool index. In some embodiments, the processing module is configured to perform at least one of the other steps (e.g., steps S2102, S2103, but not limited thereto) performed by terminal 101 in any of the above methods, which will not be elaborated here.

FIG. 6B is a schematic diagram of a structure of a network device provided in an embodiment of the present disclosure. As shown in FIG. 6B, the network device 6200 may include at least one of the following: a transceiver module 6201, etc. In some embodiments, the transceiver module is configured to transmit first indication information, which indicates at least one set of indicated Transmission Configuration Indication (TCI) states. The at least one set of indicated TCI states is used by the terminal to determine a first quasi co-location QCL assumption, which is a QCL assumption of the aperiodic Channel State Information Reference Signal (AP CSI-RS). The time-domain interval between the AP CSI-RS and the first Physical Downlink Control Channel (PDCCH) that schedules the AP CSI-RS is less than or equal to a first time threshold. The AP CSI-RS is in the same symbol as other downlink signals. The control resource set (CORESET) corresponding to the first PDCCH corresponds to the first control resource set pool index. In some embodiments, the transceiver module is configured to perform at least one of the communication steps such as transmitting and/or receiving, etc. (e.g., step S2101, but not limited to) performed by the network device 102 in any of the above methods, which will not be elaborated further here.

In some embodiments, the transceiver module may include a transmitting module and/or a receiving module, which may be separate or integrated. For example, the transceiver module may be interchangeable with a transceiver.

In some embodiments, the processing module may be a single module or may include multiple sub-modules. For example, the multiple sub-modules may each execute all or part of the steps required by the processing module. For example, the processing module may be interchangeable with a processor.

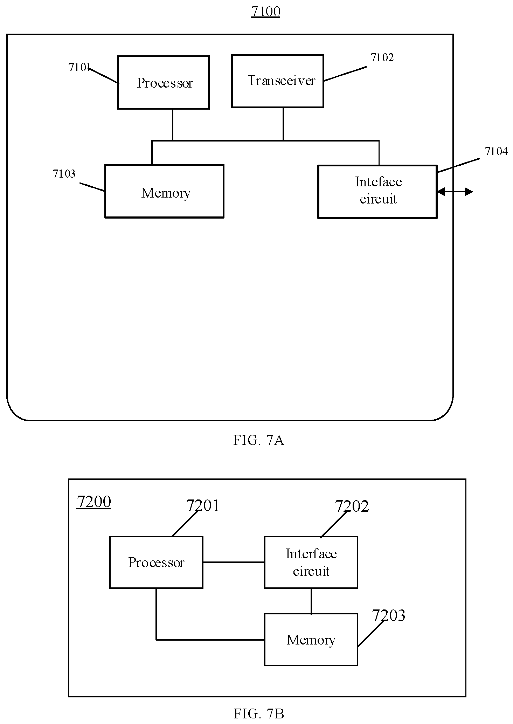

FIG. 7A is a schematic diagram of a structure of a communication device 7100 according to an embodiment of the present disclosure. The communication device 7100 may be a network device (e.g., access network device, core network device, etc.), a terminal (e.g., user equipment, etc.), a chip, chip system, or processor that supports the network device in implementing any of the above methods, or a chip, chip system, or processor that supports the terminal in implementing any of the above methods. The communication device 7100 can be configured to implement the methods described in the above method embodiments, and specific details can be found in the descriptions in the above method embodiments.

As shown in FIG. 7A, the communication device 7100 includes one or more processors 7101. The processor 7101 may be a general-purpose processor or a dedicated processor, such as a baseband processor or a central processor. The baseband processor can be configured to process communication protocols and communication data, while the central processor can be configured to control communication devices (e.g., base stations, baseband chips, terminal devices, terminal device chips, DUs or CUs, etc.), execute programs, and process program data. In some embodiments, the communication device 7100 is configured to perform any of the above methods. In some embodiments, one or more processors 7101 are configured to invoke instructions to cause the communication device 7100 to execute any of the above methods.

In some embodiments, the communication device 7100 further includes one or more transceivers 7102. When the communication device 7100 includes one or more transceivers 7102, the transceiver 7102 performs at least one of the communication steps such as transmitting and/or receiving, etc. (e.g., steps S2102, S2103, but not limited thereto) in the above methods, while the processor 7101 executes at least one of other steps (e.g., step S2101, but not limited thereto). In some embodiments, the transceiver may include a receiver and/or a transmitter, which may be separate or integrated together. In some embodiments, terms such as transceiver, transceiver unit, transceiver machine, transceiver circuit, interface circuit, interface, etc. can be used interchangeably; terms such as transmitter, transmitting unit, transmitter machine, transmitting circuit, etc. can be used interchangeably; and terms such as receiver, receiving unit, receiver machine, receiving circuit, etc. can be used interchangeably.

In some embodiments, the communication device 7100 further includes one or more memories 7103 for storing data. In some embodiments, all or part of the memories 7103 may be located outside the communication device 7100. In some embodiments, the communication device 7100 may include one or more interface circuits 7104. In some embodiments, the interface circuit 7104 is connected to the memory 7103 and can be configured to receive data from the memory 7103 or other devices, and to send data to the memory 7103 or other devices. For example, the interface circuit 7104 can read data stored in the memory 7103 and send that data to the processor 7101.

The communication device 7100 described in the above embodiments may be a network device or a terminal, but the scope of the communication device 7100 described in the present disclosure is not limited thereto, and the structure of the communication device 7100 may not be limited by FIG. 7A. The communication device may be a standalone device or a part of a larger device. For example, the communication device may be: (1) a standalone integrated circuit IC, or chip, or chip system or subsystem; (2) a collection of one or more ICs, for example, the IC collection may also include storage components for storing data and programs; (3) an ASIC, such as a modem; (4) a module that can be embedded in other devices; (5) a receiver, terminal device, smart terminal device, cellular phone, wireless device, handheld device, mobile unit, vehicle device, network device, cloud device, artificial intelligence device, etc.; (6) others, etc.

FIG. 7B is a schematic diagram of a structure of chip 7200 according to an embodiment of the present disclosure. For cases where the communication device 7100 can be a chip or a chip system, the schematic diagram of chip 7200 shown in FIG. 7B can be referenced, but is not limited thereto.

The chip 7200 includes one or more processors 7201. The chip 7200 is configured to perform any of the methods described above.

In some embodiments, the chip 7200 further includes one or more interface circuits 7202. For example, terms such as interface circuit, interface, and transceiver pin can be used interchangeably. In some embodiments, the chip 7200 further includes one or more memories 7203 for storing data. For example, all or part of the memories 7203 may be located outside of the chip 7200. For example, the interface circuit 7202 is connected to the memory 7203, and the interface circuit 7202 can be configured to receive data from the memory 7203 or other devices, and the interface circuit 7202 can be configured to send data to the memory 7203 or other devices. For example, the interface circuit 7202 can read data stored in the memory 7203 and send that data to the processor 7201.

In some embodiments, the interface circuit 7202 performs at least one of the communication steps such as transmitting and/or receiving, etc. (e.g., steps S2102, S2103, but not limited thereto) in the above-described method. For example, the interface circuit 7202 performing the communication steps such as transmitting and/or receiving, etc. in the above-described method refers to the interface circuit 7202 performing data interaction between the processor 7201, the chip 7200, the memory 7203, or the transceiver device. In some embodiments, the processor 7201 performs at least one of other steps (e.g., step S2101, but not limited thereto).

The modules and/or devices described in the various embodiments, such as virtual devices, physical devices, and chips, can be arbitrarily combined or separated as needed. In some embodiments, some or all of the steps can also be performed collaboratively by multiple modules and/or devices, without limitation herein.

The present disclosure also provides a storage medium storing instructions that, when executed on the communication device 7100, cause the communication device 7100 to perform any of the above methods. In some embodiments, the storage medium is an electronic storage medium. In some embodiments, the storage medium described above is a computer-readable storage medium, but is not limited thereto; it may also be a storage medium readable by other devices. In some embodiments, the storage medium described above may be a non-transitory storage medium, but is not limited thereto; it may also be a transitory storage medium.

The present disclosure also provides a program product that, when executed by the communication device 7100, causes the communication device 7100 to perform any of the above methods. In some embodiments, the program product described above is a computer program product.

The present disclosure also provides a computer program that, when run on a computer, causes the computer to perform any of the above methods.

## Claims

1. A quasi co-location assumption determination method, comprising:
determining, by a terminal, a first quasi co-location QCL assumption, wherein the first QCL assumption is a QCL assumption of an aperiodic channel state information reference signal AP CSI-RS;
wherein a time-domain interval between the AP CSI-RS and a first physical downlink control channel PDCCH that schedules the AP CSI-RS is less than or equal to a first time threshold;
the AP CSI-RS is in the same symbol as other downlink signal;
a control resource set CORESET corresponding to the first PDCCH corresponds to a first control resource set pool index.

2. The method according to claim 1, wherein:
the first QCL assumption is the same as a second QCL assumption, wherein the second QCL assumption is a QCL assumption of the other downlink signal.

3. The method according to claim 1, wherein:
the first QCL assumption corresponds to a first indicated transmission configuration indication state among two indicated transmission configuration indication states indicated TCI states.

4. The method according to claim 1, wherein a transmission configuration indication state TCI state corresponding to the first QCL assumption is determined based on a radio resource control RRC configuration;
wherein the transmission configuration indication state corresponding to the first QCL assumption comprises any one of:
corresponding to a first indicated transmission configuration indication state among two indicated transmission configuration indication states; or
corresponding to a second indicated transmission configuration indication state among two indicated transmission configuration indication states.

5. The method according to claim 3 or 4, wherein the indicated transmission configuration indication state comprises an indicated joint transmission configuration indication indicated joint TCI state, or an indicated downlink transmission configuration indication indicated DL TCI state.

6. The method according to claim 1 or 2, wherein the AP CSI-RS is configured to any one of:
follow unified TCI state; or
not follow unified TCI state.

7. The method according to any one of claims 1, 2, and 6, wherein the other downlink signal comprises at least one of:
a physical downlink shared channel PDSCH scheduled by a second PDCCH;
an AP CSI-RS scheduled by a third PDCCH;
a periodic CSI-RS; or
a semi-persistent CSI-RS;
wherein a time-domain interval between the PDSCH and the second PDCCH is greater than or equal to a second time threshold;
a time-domain interval between the AP CSI-RS scheduled by the third PDCCH and the third PDCCH is greater than the first time threshold; and
a control resource set pool index of a control resource set corresponding to the second PDCCH or the third PDCCH is the first control resource set pool index.

8. The method according to claim 1 or 3, wherein a TCI state of the AP CSI-RS is not configured to follow unified TCI state.

9. The method according to claim 1 or 4, wherein the RRC configuration comprises any one of:
the RRC configures the AP CSI-RS to follow a first indicated transmission configuration indication state; or
the RRC configures the AP CSI-RS to follow a second indicated transmission configuration indication state.

10. The method according to any one of claims 1, 3, 4, 8, and 9, wherein the other downlink signal comprises:
a first PDSCH and a second PDSCH;
the first PDSCH and the second PDSCH satisfy at least one of:
a time-domain interval between the first PDSCH and a fourth PDCCH is greater than or equal to a second time threshold, wherein the fourth PDCCH is a PDCCH that schedules the first PDSCH;
a time-domain interval between the second PDSCH and a fifth PDCCH is greater than or equal to the second time threshold, wherein the fifth PDCCH is a PDCCH that schedules the second PDSCH;
a control resource set pool index of a control resource set corresponding to the fourth PDCCH is different from a control resource set pool index of a control resource set corresponding to the fifth PDCCH;
the first PDSCH corresponds to a first indicated joint transmission configuration indication state or a first indicated downlink transmission configuration indication state indicated DL TCI state; or
the second PDSCH corresponds to a second indicated joint transmission configuration indication state or a second indicated downlink transmission configuration indication state.

11. The method according to claim 4, wherein the two indicated transmission configuration indication states are determined based on first indication information, wherein the first indication information satisfies at least one of:
the first indication information comprises a first media access control control element MAC CE, the first MAC CE is configured to activate at least one set of indicated transmission configuration indication states; the at least one set of indicated transmission configuration indication states corresponds to a code point in a transmission configuration indication state indication field of downlink control information DCI; or
the first indication information comprises a second MAC CE and a first DCI, wherein the second MAC CE is configured to indicate at least one set of indicated transmission configuration indication states corresponding to each code point in a plurality of code points in the transmission configuration indication state indication field of the DCI, and a transmission configuration indication state indication field of the first DCI is configured to indicate one code point in the plurality of code points,
wherein one set of indicated transmission configuration indication states comprises an indicated joint transmission configuration indication state, or one set of indicated transmission configuration indication states comprises an indicated downlink transmission configuration indication state and/or an indicated uplink transmission configuration indication state.

12. The method according to any one of claims 1 to 11, wherein the AP CSI-RS is a CSI-RS for CSI measurement or a CSI-RS for beam management.

13. A quasi co-location assumption determination method, comprising:
transmitting first indication information, wherein the first indication information is configured to indicate at least one set of indicated transmission configuration indication states indicated TCI states,
wherein the at least one set of indicated transmission configuration indication states is used by a terminal to determine a first quasi co-location QCL assumption, and the first QCL assumption is a QCL assumption of an aperiodic channel state information reference signal AP CSI-RS;
wherein a time-domain interval between the AP CSI-RS and a first physical downlink control channel PDCCH that schedules the AP CSI-RS is less than or equal to a first time threshold;
the AP CSI-RS is in the same symbol as other downlink signal;
a control resource set CORESET corresponding to the first PDCCH corresponds to a first control resource set pool index.

14. The method according to claim 13, wherein:
the first QCL assumption is the same as a second QCL assumption, wherein the second QCL assumption is a QCL assumption of the other downlink signal.

15. The method according to claim 13, wherein:
the first QCL assumption corresponds to a first indicated transmission configuration indication state among two indicated transmission configuration indication states.

16. The method according to claim 13, wherein,
a radio resource control RRC configuration signaling is transmitted to indicate a transmission configuration indication state TCI state corresponding to the first QCL assumption;
wherein the transmission configuration indication state corresponding to the first QCL assumption includes any one of:
corresponding to a first indicated transmission configuration indication state among two indicated transmission configuration indication states;
corresponding to a second indicated transmission configuration indication state among two indicated transmission configuration indication states.

17. The method according to claim 15 or 16, wherein the indicated transmission configuration indication state comprises an indicated joint transmission configuration indication indicated joint TCI state, or an indicated downlink transmission configuration indication indicated DL TCI state.

18. The method of claim 13 or 14, wherein a radio resource control RRC configuration signaling is transmitted, indicating that the AP CSI-RS follows unified TCI state or does not follow unified TCI state.

19. The method according to any one of claims 13, 14, and 18, wherein the other downlink signal comprises at least one of:
a physical downlink shared channel PDSCH scheduled by a second PDCCH;
an AP CSI-RS scheduled by a third PDCCH;
a periodic CSI-RS; or
a semi-persistent CSI-RS;
wherein a time-domain interval between the PDSCH and the second PDCCH is greater than or equal to a second time threshold;
a time-domain interval between the AP CSI-RS scheduled by the third PDCCH and the third PDCCH is greater than the first time threshold;
a control resource set pool index of a control resource set corresponding to the second PDCCH or the third PDCCH is the first control resource set pool index.

20. The method according to claim 13 or 15, wherein a radio resource control RRC configuration signaling is transmitted, indicating that a TCI state of the AP CSI-RS does not follow the unified TCI state.

21. The method according to claim 13 or 16, wherein the RRC configuration comprises any one of:
the RRC configures the AP CSI-RS to follow a first indicated transmission configuration indication state; or
the RRC configures the AP CSI-RS to follow a second indicated transmission configuration indication state.

22. The method according to any one of claims 13, 15, 16, 20, and 21, wherein the other downlink signal comprises:
a first PDSCH and a second PDSCH;
the first PDSCH and the second PDSCH satisfy at least one of:
a time-domain interval between the first PDSCH and a fourth PDCCH is greater than or equal to a second time threshold, wherein the fourth PDCCH is a PDCCH that schedules the first PDSCH;
a time-domain interval between the second PDSCH and a fifth PDCCH is greater than or equal to the second time threshold, wherein the fifth PDCCH is a PDCCH that schedules the second PDSCH;
a control resource set pool index of a control resource set corresponding to the fourth PDCCH is different from a control resource set pool index of a control resource set corresponding to the fifth PDCCH;
the first PDSCH corresponds to a first indicated joint transmission configuration indication state or a first indicated downlink transmission configuration indication state;
the second PDSCH corresponds to a second indicated joint transmission configuration indication state or a second indicated downlink transmission configuration indication state.

23. The method according to claim 16, wherein the first indication information satisfies at least one of:
the first indication information comprises a first media access control control element MAC CE, the first MAC CE is configured to activate at least one set of indicated transmission configuration indication states; the at least one set of indicated transmission configuration indication states corresponds to a code point in the TCI state indication field of downlink control information DCI; or
the first indication information comprises a second MAC CE and a first DCI, wherein the second MAC CE is configured to indicate at least one set of indicated transmission configuration indication states corresponding to each code point in a plurality of code points in the transmission configuration indication state indication field of the DCI, and a TCI state indication field of the first DCI is configured to indicate one code point in the plurality of code points,
wherein one set of indicated transmission configuration indication states comprises an indicated uplink/downlink joint transmission configuration indication state, or one set of indicated transmission configuration indication states comprises an indicated downlink transmission configuration indication state and/or an indicated uplink transmission configuration indication state.

24. The method according to any one of claims 13 to 23, wherein the AP CSI-RS is a CSI-RS for CSI measurement or a CSI-RS for beam management.

25. A quasi co-location assumption method, wherein:
a network device transmits first indication information, wherein the first indication information is configured to indicate at least one set of indicated transmission configuration indication states;
a terminal determines a first quasi co-location QCL assumption based on the at least one set of indicated transmission configuration indication states, wherein the first QCL assumption is a QCL assumption of an aperiodic channel state information reference signal AP CSI-RS;
wherein a time-domain interval between the AP CSI-RS and a first physical downlink control channel PDCCH that schedules the AP CSI-RS is less than or equal to a first time threshold;
the AP CSI-RS is in the same symbol as other downlink signal;
a control resource set CORESET corresponding to the first PDCCH corresponds to a first control resource set pool index.

26. A terminal, comprising:
a processing module, configured to determine a first quasi co-location QCL assumption, wherein the first QCL assumption is a QCL assumption of an aperiodic channel state information reference signal AP CSI-RS;
wherein a time-domain interval between the AP CSI-RS and a first physical downlink control channel PDCCH that schedules the AP CSI-RS is less than or equal to a first time threshold;
the AP CSI-RS is in the same symbol as other downlink signal;
a control resource set CORESET corresponding to the first PDCCH corresponds to a first control resource set pool index.

27. A network device, comprising:
a transceiver module, configured to transmit first indication information, wherein the first indication information is configured to indicate at least one set of indicated transmission configuration indication states indicated TCI states,
wherein the at least one set of indicated transmission configuration indication states is used by a terminal to determine a first quasi co-location QCL assumption, and the first QCL assumption is a QCL assumption of an aperiodic channel state information reference signal AP CSI-RS;
wherein a time-domain interval between the AP CSI-RS and a first physical downlink control channel (PDCCH) that schedules the AP CSI-RS is less than or equal to a first time threshold;
the AP CSI-RS is in the same symbol as other downlink signal;
a control resource set CORESET corresponding to the first PDCCH corresponds to a first control resource set pool index.

28. A terminal, comprising:
one or more processors;
wherein the processors are configured to perform the quasi co-location assumption determination method according to any one of claims 1 to 12.

29. A network device, comprising:
one or more processors;
wherein the processors are configured to perform the quasi co-location assumption determination method according to any one of claims 13 to 24.

30. A communication system, comprising a terminal and a network device, wherein the terminal is configured to implement the quasi co-location assumption determination method according to any one of claims 1 to 12, and the network device is configured to implement the quasi co-location assumption determination method according to any one of claims 13 to 24.

31. A storage medium storing instructions, wherein when the instructions are executed on a communication device, the communication device is caused to perform the quasi co-location assumption determination method according to any one of claims 1 to 12 or 13 to 24.
